# FASCICULE DE BREVET EUROPEEN

(11) **EP 2 528 776 B1**
(45) Date de publication et mention de la délivrance du brevet: **11.12.2013**
(21) Numéro de dépôt: 11705921.2
(22) Date de dépôt: 24.01.2011
(51) Int. Cl.: B60Q 3/02, G02B 6/00, F21V 8/00

(54) **VITRAGE LUMINEUX DE VEHICULE, FABRICATIONS**
GLÄNZENDER FAHRZEUGLACK LUND HERSTELLUNGSVERFAHREN DAFÜR
LUMINOUS VEHICLE GLAZING AND MANUFACTURE THEREOF

(30) Priorité: 26.01.2010 FR 1050521
(43) Date de publication de la demande: 05.12.2012
(73) Titulaire: Saint-Gobain Glass France, 92400 Courbevoie (FR)
(72) Inventeur: KLEO, Christophe, F-60350 Attichy (FR); GRANDGIRARD, Bastien, F-60490 Marqueglise (FR); RICHARD, Alexandre, 75019 Paris (FR); VERRAT-DEBAILLEUL, Adèle, F-60150 Villers Sur Coudun (FR)
(74) Mandataire: Ribeaudeau, Marion Christine
(86) Numéro de dépôt international: PCT/FR2011/050125
(87) Numéro de publication internationale: WO 2011/092419

(56) Documents cités:
- EP-A1- 1 154 199
- WO-A1-2008/090646
- WO-A2-2006/137660
- FR-A1- 2 895 781
- US-B1- 6 305 109

## Description

La présente invention concerne les vitrages de véhicule, et en particulier les vitrages lumineux de véhicule, notamment à diodes électroluminescentes, et le procédé de fabrication de tels vitrages de véhicule.

De plus en plus de véhicules font appel aux diodes électroluminescentes (LED en anglais ou DEL en français).

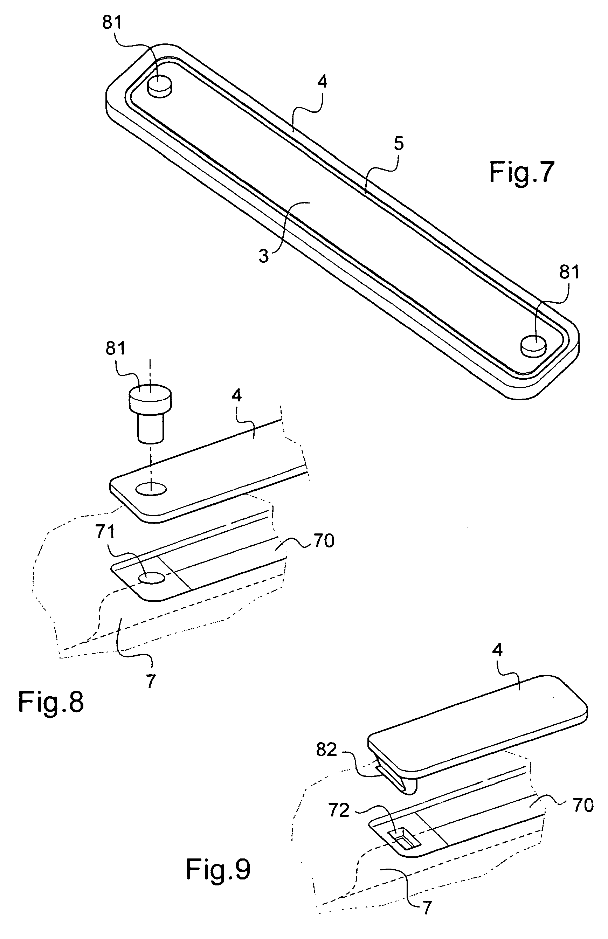

Le document WO2006128941 propose par exemple un toit panoramique à éclairage homogène sur la surface par diode(s) électroluminescente(s). Ce toit comporte une structure feuilletée qui, comme montrée en figure 8, est composée d'une feuille externe extractrice de lumière, d'une feuille centrale transparente de guidage de lumière, et d'une feuille interne de diffusion de la lumière. La source de lumière est une pluralité de diodes électroluminescentes montées sur un support latéral fixé à la tranche des feuilles interne et externe tandis qu'un trou est pratiqué dans la feuille centrale pour loger les diodes.

Le toit panoramique est fixé par collage des bords périphériques de la feuille externe à la carrosserie du toit. Les diodes et la zone de collage périphérique sont masquées par la garniture interne.

L'invention se propose d'élargir la gamme des vitrages éclairants de véhicule disponibles.

La présente invention vise en effet un vitrage lumineux de véhicule à source de lumière écologique et efficace (diodes électroluminescentes, fibre(s) optique(s) couplé à des diodes par exemple), convenant notamment pour toute configuration de toit, et particulièrement les toits montés par l'extérieur au toit de carrosserie, toits ouvrants ou fixes.

Pour cela, le vitrage lumineux de véhicule doit être durable, compact, robuste tout en restant simple, répondant ainsi au cahier des charges imposés par les constructeurs de véhicule.

La présente invention vise aussi un vitrage lumineux de véhicule s satisfaisant aux exigences industrielles (en termes de rendement, donc de coût, de cadence, d'automatisation...), rendant ainsi possible une production « bas coût » sans sacrifier les performances.

L'invention propose à cet effet un vitrage lumineux de véhicule comportant :
- une première feuille en verre minéral ou organique présentant une première face principale et une deuxième face principale et une tranche,
- une source lumineuse périphérique avec une face émettrice, choisie parmi une fibre optique et des diodes électroluminescentes comportant chacune une puce semi-conductrice sur (au moins) un profilé support des diodes (l'ensemble profilé et diodes étant appelé couramment une barrette de diodes), la face émettrice étant en regard de la tranche (en contact ou non de la tranche) dite d'injection ou d'un bord de la deuxième face dite d'injection (en contact ou non la deuxième face) pour une propagation de la lumière injectée visible et/ou ultraviolet dit UV dans l'épaisseur de la première feuille, la première feuille jouant alors le rôle de guide de la lumière injectée, (la tranche d'injection éventuellement étant en partie évidé dans son épaisseur voire avec un décrochement le profilé notamment dépassant de la tranche d'injection ou le bord d'injection éventuellement étant en partie évidé voire avec un décrochement),
- pour former au moins une zone lumineuse :
   - des moyens d'extraction de la lumière guidée via la première et/ou la deuxième face principale, qui sont des moyens de diffusion en surface de la première et/ou de la deuxième face principale ou des moyens de diffusion en volume dans la première feuille,
   - et/ou lorsque la lumière injectée est (notamment) UV, des moyens de conversion de la lumière UV en lumière visible via la première et/ou la deuxième face principale, qui sont des luminophores notamment sur la première et/ou de la deuxième face principale (alors face d'extraction),
   - un élément fonctionnel périphérique rapporté (donc distinct de la première feuille), lié à la première feuille, qui est étanche au(x) fluide(s), notamment à l'eau liquide voire vapeur, s'étendant sur la tranche d'injection ou le bord d'injection, notamment un élément fonctionnel qui est choisi parmi un surmoulage ou un élément prémonté, (métallique ou polymérique, de préférence choisi parmi un encapsulât, un extrudât, un joint, notamment collé sur la première feuille)
      l'élément fonctionnel étant pourvu d'au moins un évidement (borgne ou traversant dans l'épaisseur), notamment à contour latéral fermé ou éventuellement débouchant, notamment sur la deuxième face, si évidement facial), pour placer la source (dans ou sous l'évidement) et permettre l'injection de ladite lumière dans le bord d'injection ou la tranche d'injection,
- un élément de couverture de l'évidement et de la source, étanche au(x) fluide(s), notamment à l'eau liquide voire vapeur, qui est choisi parmi :
   - un capot solidaire par des moyens de fixation,
   - à l'élément fonctionnel,
   - et/ou à une pièce de liaison (7') placée (au moins en partie) dans l'évidement et liée à l'élément fonctionnel et/ou liée à la première feuille (notamment fixée sur la première feuille et/ou fixée à l'élément fonctionnel), pièce de liaison éventuellement solidaire de la première feuille(notamment fixée sur la première feuille et/ou fixée à l'élément fonctionnel),
- et/ou à la première feuille, notamment en verre organique le capot ayant une face générale dite interne orientée vers l'évidement,
le capot étant associé à un élément interfacial, pour l'étanchéité interfaciale au(x) fluide(s), notamment à l'eau liquide voire vapeur, qui est agencé entre le capot et l'élément fonctionnel et/ou la pièce de liaison sous jacente et/ou la deuxième face
- et/ou (notamment) agencé entre le capot (notamment sur la face interne ou un côté) et l'élément fonctionnel, ou entre le capot et la pièce de liaison,
- et/ou (notamment) intégré au capot (notamment sur la face interne ou un côté) et en contact avec l'élément fonctionnel (mousse adhésivée au capot ou à la pièce fonctionnelle, joint...), ou encore (notamment) intégré à l'élément fonctionnel en contact avec le capot (notamment la face interne), ou
- un mastic de scellement étanche au(x) fluide(s) couvrant la source (et l'évidement) et scellant l'élément fonctionnel rapporté.

Ainsi la présente invention propose un vitrage lumineux durable, même lorsque le vitrage n'est pas protégé par la carrosserie, ceci grâce aux moyens d'étanchéité simples et adaptés, supprimant des chemins de diffusion de fluide(s).

La solution selon l'invention mettant en oeuvre un ensemble de moyens pour l'étanchéité est préférée à une encapsulation totale « monolithique », notamment de surmoulage (encapsulat...) ou par un enrobage de colle, d'adhésif, dans laquelle la source lumineuse (comme par exemple les barrettes de DEL) seraient entièrement encapsulées solution rendant la source lumineuse difficilement accessible sous peine de l'abimer. On préfère ainsi une source qui n'est pas entièrement surmoulée.

En outre, l'encapsulation totale est délicate et peut détériorer la source en particulier les LEDS (et/ou leur circuit électronique) déjà montées, induisant des coûts de rebuts important, sauf à prendre des précautions rendant la fabrication complexe.

De la même façon, l'intégration de la source telle qu'une barrette à LEDs est difficile voire impossible dans le cas d'une extrusion ou d'une pièce moulée du fait du risque de dégradation de la fonction lumière.

L'élément de couverture (mastic de scellement ou capot étanche associé à une étanchéité interfaciale) est facile à (re)positionner, retirable (démontable et/ou ou arrachable et remplaçable à moindre coût) si nécessaire :
- pour changer la source de lumière (des DEL etc) et/ou leur pilotage électronique lors de réparation, ou de recyclage ou encore
- pour faire face à de nouvelles d'exigences de performances optiques souhaitées par le client (changement de couleur(s), de puissance, de fréquence, de commande) ou par de nouvelles normes imposées,
- et/ou pour (r)ajouter des sources (DEL et/ou fibre optique) et/ou des pilotages électroniques dans un vitrage avec l'évidement et les tels moyens d'étanchéité selon l'invention.

L'invention facilite ainsi la modularité de l'éclairage proposé sur le vitrage (vitrage éclairant ou pouvant de le devenir, variation de couleur, intensité...) - au niveau de la gestion logistique des flux en production (montage en dépôt avancé plutôt qu'à la demande du client).

L'invention réduit l'impact de l'intégration de la source (DEL etc) sur le choix des procédés et matières et permet de ne pas être dépendant d'une technologie de réalisation car elle offre un large panel de solutions d'encapsulation ou de pré-montage utilisables.

Par ailleurs, la solution selon l'invention est souple, car le capot ou le mastic peut être mis en place indépendamment de la source (par exemple de la ou des barrettes de DEL).

L'invention rend possible la fabrication d'un vitrage lumineux de véhicule avec un élément fonctionnel, rapporté sur le vitrage de manière habituelle, notamment fabriqué selon les techniques habituelles (extrudé, moulé...), l'élément fonctionnel pouvant être modifié de manière appropriée (évidé) pour loger les LEDs en post montage.

Le mastic (et le capot dans certaines configurations) n'est pas visible après montage sur la carrosserie du véhicule.

Par ailleurs, l'élément fonctionnel associé à l'élément de couverture et à l'éventuel élément d'étanchéité interfaciale selon l'invention sont utiles en particulier pour une protection contre l'humidité de la source, notamment des puces, pour éviter une pollution de l'espace de couplage (salissures, pollution organique, type moisissures...) et de préférence aux produits de nettoyage, ou à un lavage par jet à haute pression. Cette protection doit être pérenne.

Pour qualifier l'étanchéité à l'humidité à long terme on peut recourir au test cataplasme humide. Par exemple la norme D47 1165-H7 utilisée dans l'automobile décrit le test de cataplasme humide H7.

Ce test consiste à noyer la pièce à tester dans du coton imbibé d'eau déminéralisée et à enfermer le tout dans un sac hermétique, puis à le placer en étuve à 70+/- 2°C pendant 7 jours. Ensuite les pièces sont sorties, débarrassées du coton trempé et placées à 20°C pendant 2 heures. Les pièces peuvent enfin être observées et testées mécaniquement ou fonctionnellement pour évaluer l'effet de l'humidité sur le système. Ce test correspond à plusieurs années de vieillissement naturel en milieu humide et chaud.

On peut aussi utiliser un test de nettoyage par jet d'eau haute pression, comme le test de résistance au lavage par nettoyeur haute pression D25 5376 utilisé dans l'automobile : pression jusqu'à 100 bars avec une distance buse/caisse jusque 100 mm.

L'élément de couverture
- en regard du bord d'injection peut être dit essentiellement facial, c'est-à-dire au dessus et/ou sur la deuxième face, par exemple une face interne sensiblement parallèle à la deuxième face ou en décalé de la deuxième face, donc au-dessus d'au moins l'espace des rayonnements émis avant l'injection, dit espace de couplage,
- ou est latéral (avec une face interne) en regard de ladite tranche d'injection, notamment un capot latéral, en regard de la tranche d'une deuxième feuille et/ou d'une troisième éventuelle feuille dudit vitrage alors multiple notamment avec lame(s) de gaz séparatrices des feuille(s) ou encore un mastic latéral notamment dans ledit vitrage choisi multiple notamment feuilleté.

L'élément fonctionnel périphérique est lié à la première feuille. L'élément fonctionnel peut être un encapsulât, un extrudât, un joint prémonté (lécheur), une pièce moulée, injectée....

L'élément fonctionnel est directement sur la première feuille ou indirectement par exemple via un élément, de renfort, d'adhésion.

L'élément fonctionnel peut être ainsi lié au vitrage par tout moyen :
- adhésion directe de la matière (moulée...),
- pincement ou chaussement,
- moyen de liaison de type collage, etc.

L'élément fonctionnel peut être monoface c'est-à-dire seulement :
- sur la deuxième face, avec l'évidement jusqu'au bord d'injection,
- sur la tranche de la première feuille (avec l'évidement jusqu'avec la tranche d'injection, et dans le cas d'un vitrage feuilleté ou d'un double ou triple vitrage (surtout dans les bus et dans le ferroviaire ou encore pour l'aérien) sur toute ou partie la tranche du vitrage.

L'élément fonctionnel peut être :
- biface : sur la deuxième face avec l'évidement jusqu'au bord d'injection et sur la tranche ou sur la première face et sur la tranche avec l'évidement jusqu'avec la tranche d'injection),
- voire triface : sur la première face, sur la tranche d'au moins la première feuille (ou du vitrage) et sur la deuxième face de la première feuille.

L'élément fonctionnel sur la deuxième face peut servir pour masquer la source.

L'évidement dans l'élément fonctionnel peut être de toute forme possible : oblongue, ovale, rectangulaire...

Cet évidemment est de taille adaptée pour loger la source dans l'évidement et/ou pour installer la source dans une zone sous jacente à l'évidement par exemple un trou dans la première feuille.

La largeur de l'évidemment peut être comprise de 5 à 200 mm et de préférence de 10 à 40 mm.

La longueur de l'évidemment peut être comprise 10 et 1000 mm, de préférence de50 à 600 mm.

La profondeur de l'évidemment est suffisante par exemple de 1 mm à 100 mm, de préférence de 2 à 20 mm (voire moins si en regard de la tranche).

Le vitrage lumineux de véhicule comporte un élément fonctionnel surmoulé, polymérique, et de préférence entre l'encapsulation et le vitrage, notamment en verre minéral, une couche de primaire, mono, bi ou tri-composants, par exemple à base de polyuréthane, polyester, polyvinyle acétate, isocyanate.

Comme déjà vu, l'élément fonctionnel peut être une encapsulation polymérique, notamment épaisse de 0,5 mm à plusieurs cm, obtenue par surmoulage.

Dans les applications de véhicules, la matière d'encapsulation est généralement noire ou colorée (pour des fins esthétiques et/ou de masquage). L'encapsulation peut être en polyuréthane, notamment en PU-RIM (Reaction In Mold en anglais). D'autres matières de surmoulage sont :
- les thermoplastiques souples :
- thermoplastique élastomère (TPE), notamment composés à base de styrène éthylène butadiène styrène SEBS/ polypropylène (PP), thermoplastique TPU, polypropylène PP/EPDM,
- polyvinyle chlore (PVC), terpolymère éthylène-propylène-diène (EPDM),
- thermoplastiques rigides :
- polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA.

La matière de surmoulage peut être colorée, chargée des fibres de verre.

La couche de primaire, mono, bi ou tri-composants, est par exemple à base de polyuréthane, polyester, polyvinyle acétate, isocyanate ..., par exemple épaisse de 5 à 50 µm, entre l'encapsulation et le vitrage en particulier en verre minéral, car cette couche favorise l'adhésion à un verre minéral.

L'élément fonctionnel (surmoulé) apporte également une bonne finition esthétique et permet d'intégrer d'autres éléments ou fonctions :
- surmoulage de cadres,
- inserts de renforcement ou inserts de fixation du vitrage, notamment pour les vitrages ouvrants,
- profil d'étanchéité à lèvres multiples (double, triple ...), s'écrasant après montage sur la carrosserie,
- enjoliveur.

L'élément fonctionnel surmoulé peut être de toute forme, avec ou sans lèvre.

Un tubing, autrement dit un profil d'étanchéité à cellules fermées, peut aussi être accolé à l'élément fonctionnel surmoulé.

De préférence pour un toit, on réalise une encapsulation flush, c'est-à-dire affleurante à une des faces du vitrage, la deuxième face de préférence

Le vitrage lumineux de véhicule comprend un élément fonctionnel qui est une pièce monoface sur la deuxième face, notamment un surmoulage ou une pièce (joint, cadre) collée, une pièce avec un support de fixation (X) d'un élément de véhicule sur le vitrage ou du vitrage sur un élément de véhicule, le long d'au moins un bord d'injection voire d'au moins deux bords opposés du vitrage.

L'élément fonctionnel peut être un joint polymérique, de préférence en élastomère, notamment en TPE (pour thermoplastique élastomère), ou EPDM, épais de quelques mm (typiquement entre 2 et 15 mm).

Le joint peut être adhésivé pour son maintien. Le joint peut préférablement tenir simplement par pincement ou par chaussage ou par clipsage (2 demi-cadres par exemple). Le joint peut être monoface, biface, triface. Le joint peut former un cadre. Le joint peut être de toute forme : en L, en U... Le joint peut être démontable à tout moment. Il peut comporter par une ou plusieurs de lèvres mises en contrainte après fixation.

L'élément fonctionnel peut être métallique ou polymérique, polypropylène (PP), polyamide (PA66), polybutylène téréphtalate (PBT) ... chargé ou non de fibres de verre.

De manière avantageuse, le vitrage peut comporter plusieurs sources, notamment groupes desdites diodes réparties sur plusieurs profilés (donc plusieurs barrettes de diodes),
- ledit mastic de scellement étant prévu pour chaque groupe de diodes, mastic continu ou discontinu,
- un capot et un élément d'étanchéité interfaciale sont prévus pour chaque groupe (barrette) de diodes, ledit élément fonctionnel comprenant plusieurs évidements (par exemple tous faciaux ou tous latéraux) pour loger les groupes de diodes,
- et/ou le capot et l'élément d'étanchéité interfaciale étant communs à plusieurs (barrettes) groupes de diodes, logé dans le même évidement.

L'élément fonctionnel conserve une ou des fonctionnalités standards pour le vitrage de véhicule.

L'élément fonctionnel peut éventuellement avoir des dimensions spécifiques (plus grandes par exemple) localement pour dimensionner à façon l'évidement.

La fonctionnalité (simple ou multiple) de l'élément fonctionnel peut être l'une ou les suivantes :
- cadre du vitrage (monoface, biface, triface comme déjà vu), notamment de largeur sur la première face de 3 à 100 mm, de 10 à 40 mm d'épaisseur,
et/ou
- pièce porteuse d'éléments de fixation ou de centrage (c'est-à-dire pour un bon positionnement du vitrage sur la carrosserie du véhicule lors du montage du vitrage chez le constructeur),
- pièce d'étanchéité au(x) fluide(s) (eau liquide, vapeur, produits de nettoyage...) entre le vitrage et la carrosserie du véhicule, au moins limitant le passage des fluides entre le vitrage et la carrosserie du véhicule,
- pièce opaque et/ou de masquage,
et/ou
- pièce (ponctuelle) de maintien d'éléments mécaniques (« holder » de vitre latérale...).

De préférence la distance entre la face interne du capot et la première face est inférieure à 10 mm.

De préférence, la distance entre la face externe du capot le bord ou la tranche d'injection est inférieure à 15 mm. L'épaisseur du capot peut être inférieure à 5mm.

Par ailleurs, l'espace des rayonnements émis avant injection, dudit espace de couplage varie naturellement en fonction du diagramme de rayonnement de la source, défini par une direction principale d'émission et un cône d'émission.

On peut prévoir une matière de remplissage de l'espace de couplage transparente au(x)dit(s) rayonnement(s) adhésive ou non, notamment :
- une mousse, une résine thermoplastique,
- une matière adhésive, de type colle, noyant les puces et fixant les puces au vitrage,
- un adhésif double face, collé sur les puces et le support par une face adhésive et collé au vitrage par l'autre face adhésive.

Comme matières adhésives (polymères etc) remplissant si nécessaire une fonction d'étanchéité à court terme, on peut citer :
- colle réticulable aux UV,
- une bande (acrylique, PU..) adhésivée avec colle acrylique,
- une colle transparente, PU, silicone, acrylique,
- une résine thermoplastique : polyvinyl butyral (PVB), copolymère éthylène/acétate de vinyle (EVA) ...

Toutefois l'invention permet d'éviter l'ajout d'un élément supplémentaire tel que précité (matière de remplissage et/ou adhésive et/ou matière étanchéité) pour réaliser le couplage optique entre les DEL (nues ou pré-encapsulées) et le vitrage. De tels éléments engendrent un surcoût et sont susceptibles de modifier la couleur de la lumière.

Ainsi, de manière avantageuse, l'espace des rayonnements émis avant injection, dit espace de couplage est gazeux (un ou plusieurs gaz, par exemple de l'air) et/ou l'élément d'étanchéité interfaciale au(x) fluide(s), local, est en périphérie de la face interne du capot ou sur un côté du capot, notamment l'élément d'étanchéité interfaciale au(x) fluide(s) forme un cordon.

Le mastic de scellement peut être adapté pour ne pas diffuser dans l'espace de couplage,
- de matière adaptée pour ne pas fluer (rajout d'une matrice type tissu, adaptation de la viscosité,...), par exemple en PU notamment monocomposant réticulant à l'humidité,
- barrière sous-jacente, qui peut être un élément additionnel contre le mastic, par exemple la face arrière du profilé support éventuellement complété par l'adhésif de fixation du profilé,
- mastic préformé et collage périphérique sur l'élément fonctionnel...

Le mastic de scellement peut présenter un fil pour cisailler (par traction) le mastic.

Les diodes peuvent être (pré) encapsulées, c'est-à-dire comprenant une puce semi-conductrice et une enveloppe, par exemple en résine type époxy ou en PMMA, encapsulant la puce et dont les fonctions sont multiples : élément diffusant ou de focalisation, conversion de longueur d'onde. L'enveloppe est commune ou individuelle.

Les diodes peuvent être de préférence simples puces semiconductrices par exemple de taille de l'ordre de la centaine de µm ou du mm.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

La diode peut être choisie notamment parmi au moins l'une des diodes électroluminescentes suivantes :
- une diode à émission latérale, c'est-à-dire parallèlement aux (faces de) contacts électriques, avec une face émettrice latérale par rapport au support,
- une diode dont la direction principale d'émission est perpendiculaire ou oblique par rapport la face émettrice de la puce.

Le diagramme d'émission d'une source peut être lambertien.

Le vitrage peut ainsi intégrer toutes fonctionnalités connues dans le domaine du vitrage. Parmi les fonctionnalités rajoutées sur le vitrage, on peut citer : couche hydrophobe/oléophobe, hydrophile/oléophile, photocatalytique antisalissure, empilement réfléchissant le rayonnement thermique (contrôle solaire) ou infra rouge (bas-émissif), antireflet.

Le profilé support quant à lui peut être en périphérie de bord(s) du vitrage : sur la tranche de la première feuille et/ou sur la face inférieure de la première feuille et/ou sur la face supérieure de la première feuille).

Le profilé support peut être de longueur (et/ou respectivement largeur) inférieure à la longueur (respectivement largeur) du bord de couplage de la première feuille.

Le profilé support peut être un PCB classique ou être métallique

Le profilé support peut avoir une section rectangulaire.

Le nombre total de diodes, la puissance des diodes sont choisies par la taille et la localisation des zones à éclairer, par l'intensité lumineuse souhaitée et l'homogénéité de lumière requise.

La longueur du profilé support varie en fonction du nombre de diodes et de l'étendue de la surface à éclairer.

Le profilé support de DEL a une longueur par exemple de l'ordre de 20 cm. On multiplie de préférence le nombre de barrettes de DEL (profilé + DEL) pour couvrir la surface.

Pour davantage de compacité et/ou une conception simplifiée, le profilé support peut présenter en outre l'une ou les caractéristiques suivantes :
- être mince, notamment d'épaisseur inférieure ou égale à 1 mm, voire à 0,1,
- avoir un revêtement de surface métallique pour une conduction électrique,

On peut prévoir plusieurs profilés supports à diodes identiques ou similaires au lieu d'un seul profilé support notamment si les zones à éclairer sont très distantes entre elles ou pour éclairer une large zone.

On peut prévoir un profilé support avec une taille de référence donnée multiplié en fonction de la taille du vitrage et des besoins.

Pour davantage de compacité et/ou pour augmenter la zone de clair de vitre, la distance entre la partie porteuse des puces et la première feuille est de préférence inférieure ou égale à 5 mm, et de préférence la distance entre les puces et la première feuille est inférieure ou égale à 2 mm.

La fixation de la source au vitrage est réalisé en dehors de l'espace de couplage, notamment en dehors de la tranche d'injection ou du bord d'injection et pour les diodes par la fixation du profilé support, notamment par collage ou adhésif double face ou clipsage (en cas de capot essentiellement facial) sur l'une des faces de la première feuille, notamment la deuxième face, ou sur l'une des faces d'une deuxième feuille associée et en regard de la première feuille et dépassante de la tranche d'injection pour ladite fixation ou d'un intercalaire de feuilletage ou sur la face interne du capot ou sur l'élément fonctionnel, notamment sur une marche pour poser le profilé support.

Comme moyens de fixation « permanents » du capot, on peut choisir un collage, une soudure, ou encore un bouterollage, en fonction du type de pièce.

Comme moyens d'étanchéité interfaciale « permanents », on peut choisir un collage, une soudure, pouvant aussi être les moyens de fixations.

Toutefois, pour faciliter le démontage voire le remplacement du capot, l'élément d'étanchéité interfacial, de préférence en périphérie du capot, est une colle réversible, faisant partie ou constituant lesdits moyens de fixation du capot alors réversibles, de préférence un cordon de colle arrangé en cordon notamment entre la face interne du capot et l'élément fonctionnel.

Comme colle réversible, on peut citer des époxys notamment bicomposants par exemple les produits de la gamme ElectRelease™ de la société EIC Laboratories.

Alternativement ou cumulativement, pour faciliter le démontage et le remontage, l'élément d'étanchéité interfacial, de préférence en périphérie du capot, peut être une matière comprimée, l'étanchéité par compression de la matière étant réalisée par un effort de fermeture desdits moyens de fixation du capot, notamment l'élément d'étanchéité interfacial est choisi parmi :
- un joint polymérique par exemple en TPE, en EPDM notamment un joint torique, à lèvre(s) d'étanchéité, le joint étant notamment dans une rainure du capot, ou une rainure dans l'élément fonctionnel ou de la pièce de liaison ou de la deuxième face,
- un profil d'étanchéité sur l'élément fonctionnel, choisi polymérique, par exemple lèvre(s) d'encapsulât ou de joint prémonté, notamment en EPDM, sur la face interne ou un côté du capot polymérique ; ou un profil d'étanchéité sur la pièce de liaison,
- une mousse éventuellement adhésivée (au capot ou à la pièce de liaison ou à l'élément fonctionnel liaison ou à la deuxième face) notamment mousse acrylique, PU, caoutchouc (EDPM..), thermoplastiques élastomères, en TPE, en polyester, notamment en polyester caoutchouc monocomposant tel que le produit Dynafoam vendu par la société Saint-Gobain Performance Plastics.

On peut ainsi s'affranchir de l'usage d'adhésif d'étanchéité.

Dans un premier mode de réalisation avantageux, de préférence en relation avec l'étanchéité par compression, les moyens de fixation sont réversibles, les moyens de fixation sont choisis parmi :
- des moyens de clipsage, ponctuels (ergots ...) ou étendus (c'est-à-dire s'étendant sur toute la longueur du capot), agencés sur la face interne du capot, de préférence faisant partie intégrante du capot, (de préférence dans la zone d'étanchéité définie par l'élément d'étanchéité interfacial), et notamment reçus pour le clipsage dans une ou des zones d'accueil (72) de l'élément fonctionnel et/ou de la pièce de liaison et/ou de la première feuille notamment organique,
- des moyens de clipsage, par exemple de type crochet, faisant partie intégrante du capot, de préférence en dehors dans la zone d'étanchéité, notamment reçus dans une ou des zones d'accueil de l'élément fonctionnel et/ou de la pièce de liaison et/ou de la première feuille notamment organique,
- des moyens de vissage, (tels que vis, boulon) dépassant de la face interne, (par exemple logés dans des perforations du capot ou faisant partie intégrante du capot facial, éventuellement via des trous borgnes), de préférence dans la zone d'étanchéité, notamment entre l'élément d'étanchéité interfacial et le bord de l'évidement notamment reçus dans une ou des zones d'accueil de l'élément fonctionnel et/ou de la pièce de liaison et/ou de la première feuille notamment organique.

La matière notamment polymérique de l'élément fonctionnel (surmoulage, pièce rapportée...) peut ne pas satisfaire aux exigences de clipsage : trop souple etc.

Aussi, la pièce de liaison est utile et forme de préférence une pièce évidée monoface à contour fermé tel qu'un cadre (en contact ou non avec l'évidement).

Dans un troisième mode de réalisation avantageux, simple à réaliser, de préférence en relation avec l'étanchéité par compression, la première feuille est en verre notamment organique, notamment en PC, avec un trou borgne dans son épaisseur, de la deuxième face, (prolongeant l'évidement sus-jacent) par exemple un décrochement, pour loger la source en regard du bord d'injection.

Dans une feuille organique, notamment en plastique, on peut en effet pratiquer plus facilement des rainures et un évidement périphérique que dans une feuille en verre (minérale), notamment trempée.

Dans un mode de réalisation préféré, le trou est sur tout le pourtour de la deuxième face et le capot forme un cadre notamment intégrant lesdits moyens de fixation (par vissage ou clipsage etc).

Le vitrage comprend un élément de masquage de la source et d'éventuelle lumière parasite (notamment en face opposée à la face d'extraction, à proximité de la zone d'injection), et/ou de masquage de la fixation du vitrage à la carrosserie du véhicule par la deuxième face, l'élément de masquage pouvant être
- un partie de la pièce fonctionnelle, notamment une encapsulation polymérique (suffisamment opaque noire),
- et/ou un émail suffisamment opaque, sur la périphérie de la deuxième face et/ou sur la première face ou une face d'un film en feuille rapporté en regard de la première face notamment lorsque l'élément fonctionnel est monoface ou biface,
- et/ou une surface réfléchissante (couche ...) sur la périphérie de la deuxième face et/ou sur la première face ou une face rapportée en regard de la première face,
- et/ou la première feuille est organique, bimatière transparente et opaque, notamment en polycarbonate,
- la zone opaque de la première feuille sur la périphérie de la deuxième face et/ou sur la première face, forme un masquage de la source et d'éventuelle lumière parasite (à proximité de l'injection), et/ou forme un masquage de la fixation du vitrage à la carrosserie du véhicule par la deuxième face.

Le capot, (notamment pièce de forme générale sensiblement plane), est un enjoliveur, (notamment de la couleur de carrosserie du véhicule), ou l'élément de couverture est masqué après fixation du vitrage à la carrosserie, capot par exemple le long d'un bord ou formant un cadre.

Le capot peut comprendre en outre des moyens de maintien dudit profilé et/ou un évidement borgne pour le passage de la connectique le long d'un logement dans l'élément fonctionnel et/ou des moyens de positionnement du profilé support des diodes (par exemple des rainures, des butées locales.., des plots).

Le capot peut comprendre en outre
- l'intégration éventuelle des fils et connectiques d'alimentation électriques (par exemple d'une barrette de diodes à l'autre) préalablement à l'intégration des diodes (surmoulage des fils ou prévoir des gorges dans le module...),
- de faciliter la sortie des fils par rapport à des connecteurs de l'alimentation principale (pouvant être la batterie, une source photovoltaïque...) au niveau de la zone de capotage par le biais d'une broche intégrée.

En outre, à partir d'un évidement de dimension prédéterminé et d'un capot porteur de la source, l'invention permet un bon positionnement de la diode par rapport à la zone d'injection de la lumière.

De préférence, le facteur de transmission de la première feuille autour du pic du rayonnement des puces (perpendiculairement aux faces principales) est supérieur ou égal à 50%, encore plus préférentiellement supérieur ou égal à 70%, et même supérieur ou égal à 80%.

Le vitrage peut avoir une couche dite protectrice (une feuille, un film, un dépôt...) sur l'une des première ou deuxième faces ou s'étendant sur ladite face. Cette couche peut avoir une fonction double :
- diffusion de lumière (par exemple film souple en PU, PE, silicone éventuellement collé par acrylique),
- protection aux rayonnements (IR, UV) : contrôle solaire, basse émissivité...,
- anti rayures,
- esthétique (teintée, avec motifs etc).

On peut prévoir de préférence pour le ou les bords de couplage de la première feuille des bords arrondis. En particulier dans le cas où l'espace des rayonnements émis est de l'air, il est possible de tirer parti de la réfraction au niveau de l'interface air/première feuille de géométrie appropriée (bord arrondi, voire même biseauté...) permettant ainsi de focaliser les rayons dans la première feuille.

Le verre peut avoir éventuellement préalablement subi un traitement thermique du type durcissement, recuit, trempe, bombage.

Le vitrage est simple, la première feuille étant en verre minéral ou organique, notamment en PC, PMMA, PU, résine ionomère, polyoléfine, éventuellement bimatière.

Le vitrage peut être feuilleté (plusieurs feuilles) formé :
- d'une première feuille transparente, verre minéral (flotté etc) ou organique (PC, PMMA, PU, résine ionomère, polyoléfine), épaisse ou mince,
- d'un intercalaire de feuilletage en matériau de feuilletage donné,
- d'une deuxième feuille (opaque ou non, transparente, teintée, en verre minéral, ou organique à fonctionnalités diverses : contrôle solaire..).

Comme intercalaire de feuilletage usuel, on peut citer le PU utilisé souple, un thermoplastique sans plastifiant tel que le copolymère éthylène/acétate de vinyle (EVA), le polyvinylbutyral (PVB). Ces plastiques ont par exemple une épaisseur entre 0,2 mm et 1,1 mm, notamment 0,38 et 0,76 mm.

On peut notamment choisir comme première feuille / intercalaire / deuxième feuille :
- verre minéral / intercalaire / verre minéral,
- verre minéral / intercalaire / polycarbonate,
- polycarbonate (épais ou non) / intercalaire / verre minéral.

Dans la présente description, en l'absence de précision, on entend par verre, un verre minéral.

On peut découper le bord de la première feuille (détourage avec évidements avant trempage) d'un vitrage simple ou feuilleté ou d'un double vitrage pour y loger les diodes.

Les premières et/ou deuxième feuilles peuvent être de toute forme (rectangulaire, carré, rond, ovale,...), et être planes ou galbées.

La première feuille peut être préférentiellement en verre sodocalcique, par exemple en verre PLANILUX de la société SAINT GOBAIN GLASS.

La deuxième feuille peut être colorée par exemple en verre VENUS de la société SAINT GOBAIN GLASS.

Le vitrage feuilleté comprend une deuxième feuille, notamment en verre minéral ou organique est feuilletée par un intercalaire de feuilletage à la première feuille et de préférence
- la tranche de la première feuille comporte un évidement marginal traversant dans l'épaisseur où est logée la source, ou la deuxième feuille est dépassante du bord d'injection de la première feuille, créant un décrochement latéral du vitrage,
- ledit évidement marginal ou ledit décrochement latéral recevant la partie inférieure (au moins) de l'évidement de l'élément fonctionnel.

Le vitrage peut être un vitrage multiple isolant, sous vide, notamment double ou triple vitrage formé :
- d'une première feuille transparente, verre minéral (flotté etc) ou organique PC, PMMA, PU, voire résine ionomère, polyoléfine, épaisse ou mince,
- d'une deuxième feuille espacée par une lame de gaz (air ou gaz inerte) (opaque ou transparente, teintée, en verre minéral ou organique à fonctionnalités diverses : contrôle solaire..).
- d'une éventuelle troisième feuille espacée par une lame de gaz (air ou gaz inerte) (opaque ou transparente, teintée, en verre minéral, ou organique à fonctionnalités diverses : contrôle solaire..).

Le vitrage est un vitrage multiple, notamment un vitrage feuilleté, un double vitrage sous vide ou isolant, ou encore un triple vitrage avec l'évidement essentiellement latéral, le capot ou mastic essentiellement latéral, la première feuille étant une feuille externe ou centrale du triple vitrage.

Pour l'extraction de la lumière on emploie des moyens de diffusion, formés soit par un traitement superficiel de la feuille de verre du type sablage, attaque acide, dépôt d'émail ou de pâte diffusante, soit par un traitement dans la masse du verre de type gravure laser.

La couche diffusante peut être composée d'éléments contenant des particules et un liant, le liant permettant d'agglomérer entre elles les particules. Les particules peuvent être métalliques ou des oxydes métalliques, la taille des particules peut être comprise entre 50 nm et 1 µm, de préférence le liant peut être minéral pour une résistance à la chaleur.

Dans un mode de réalisation préféré, la couche diffusante est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes.

Par exemple, on choisit une couche minérale diffusante d'environ 10 µm.

Pour davantage de compacité et/ou pour réduire ou augmenter la zone de clair de vitre, la distance de la face émettrice et de la première feuille peut être inférieure à 2 mm. Notamment, on peut utiliser des diodes d'encombrement réduit par exemple des puces sans lentille et/ou sans pré-encapsulation notamment de largeur de l'ordre de 1 mm, de longueur de l'ordre de 2,8 mm, de hauteur de l'ordre de 1,5 mm.

La ou les zones lumineuses, (notamment périphérique le long d'un bord du vitrage ou de bords opposés ou adjacents, en bande(s), encadrant le vitrage), on forme un éclairage interne d'ambiance, un éclairage interne de lecture par vitre latérale, toit ...), un affichage lumineux de signalisation interne et/ou externe.

La ou les zones lumineuses, notamment sont périphériques, en bande(s) encadrant le vitrage.

On ajuste l'extraction/la conversion des rayonnements (ainsi que le type et/ou la position et/ou le nombre des diodes) pour :
- un éclairage d'ambiance, de lecture, notamment visible à l'intérieur du véhicule,
- une signalisation lumineuse notamment visible à l'extérieur :
   - par activation de télécommande : détection du véhicule dans un parking ou autre, indicateur de (dé)verrouillage de portes, ou
   - signalisation de sécurité, par exemple comme feux stop sur l'arrière,
- un éclairage sensiblement homogène sur toute la surface d'extraction (une ou plusieurs zones d'extraction, fonction commune ou distincte).

La lumière peut être :
- continue et/ou par intermittence,
- monochromatique et/ou plurichromatique.

Visible à l'intérieur du véhicule, elle peut ainsi avoir une fonction d'éclairage de nuit ou d'affichage d'informations de toutes natures, de type dessin, logo, signalisation alphanumérique ou autres signalétiques.

Comme motifs décoratifs, on peut former par exemple une ou des bandes lumineuses, un cadre lumineux périphérique.

On peut réaliser une seule face d'extraction (interne au véhicule de préférence).

L'insertion de diodes dans ces vitrages permet d'autres fonctionnalités de signalisation suivantes :
- affichage de témoins lumineux de signalisation destinés au chauffeur du véhicule ou aux passagers (exemple : témoin d'alarme de température du moteur dans le pare-brise automobile, témoin de mise en fonctionnement du système de dégivrage électrique, des vitres...),
- affichage de témoins lumineux de signalisation destinés aux personnes à l'extérieur du véhicule (exemple : témoin de mise en fonctionnement de l'alarme du véhicule dans les vitres latérales),
- affichage lumineux sur les vitrages des véhicules (par exemple affichage lumineux clignotant sur les véhicules de secours, affichage de sécurité avec faible consommation électrique signalant la présence d'un véhicule en danger).

Le vitrage peut comprendre une diode réceptrice de signaux de commande, notamment dans l'infrarouge, pour télécommander les diodes.

Le vitrage est destiné à équiper tout véhicule :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses (formant une signaiisa'tion « HUD » par exemple) dans la bordure en émail ou à proximité, lunette arrière notamment dans la bordure en émail ou à proximité,
- hublot, pare-brise d'un véhicule aérien,
- vitres de fenêtre, toit, d'un véhicule aquatique, bateau, sous marin
- double ou triple vitrage dans un train, un bus.

Naturellement l'invention porte aussi sur un véhicule incorporant le vitrage défini précédemment.

L'invention vise enfin un premier procédé de fabrication du vitrage lumineux de véhicule, comprenant les étapes suivantes :
- la fourniture de la première feuille, son placement dans une moule,
- la formation de l'élément fonctionnel par le surmoulage par injection d'une matière d'encapsulation polymérique, et de façon à former en outre l'évidement, notamment au moyen d'une matière de remplissage (mousse... matière aisément retirable), d'un insert perdu, d'une partie mobile de moule,
- le montage de la source en regard du bord d'injection ou de la tranche d'injection, dans ou sous ledit évidement,
- le recouvrement de l'évidement par l'élément de couverture et sa fixation.

On propose ainsi une solution de montage post encapsulation de la source notamment des diodes avec les avantages déjà énoncés précédemment (limitation du rebut, source plus facilement accessible et/ou ajoutée ...).

L'invention vise enfin un deuxième procédé de fabrication du vitrage lumineux de véhicule, comprenant les étapes suivantes :
- la fourniture de la première feuille transparente,
- le montage de l'élément fonctionnel rapporté avec ledit évidement, notamment un joint polymérique ou une pièce métallique, et le montage de l'éventuelle pièce de liaison,
- le montage d'un profilé support de diodes sur la,première feuille et au travers dudit évidement,
- le recouvrement de l'évidement par l'élément de couverture et sa fixation.

Ces procédés de fabrication selon l'invention sont compatibles avec les procédés industriels de vitrage de véhicule.

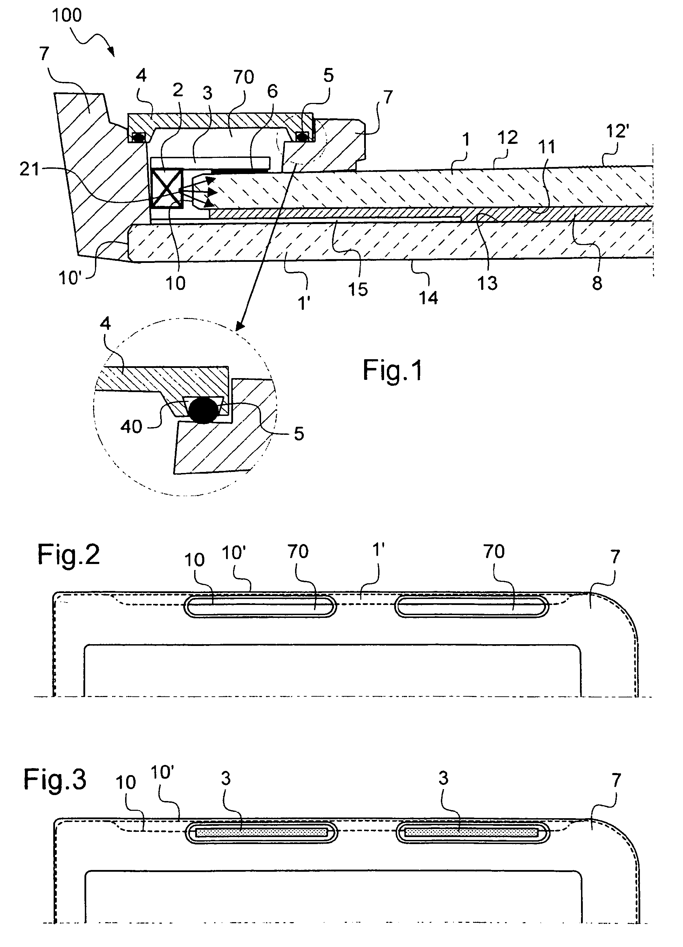

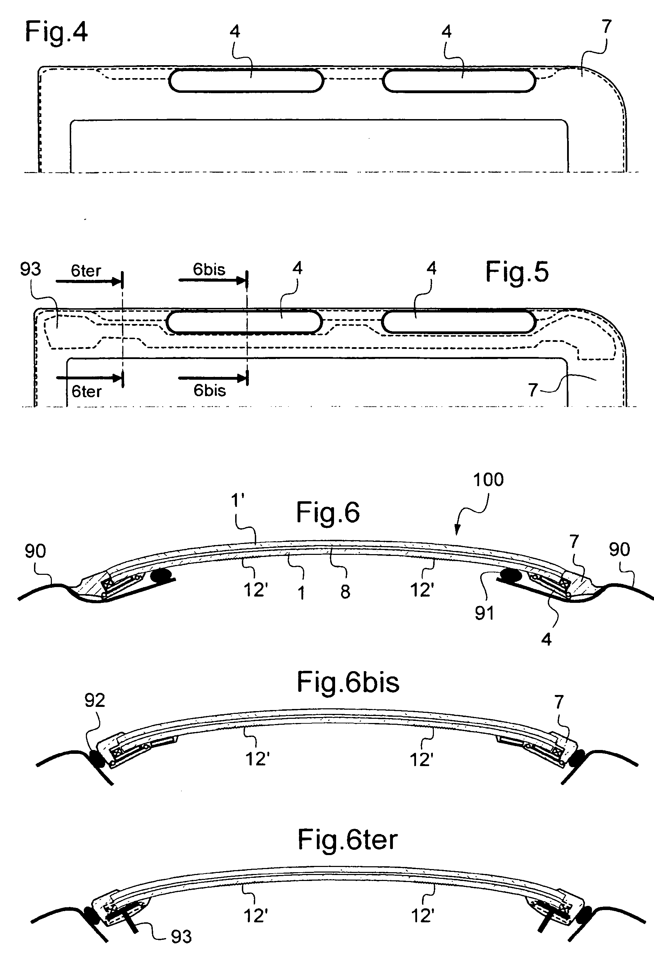

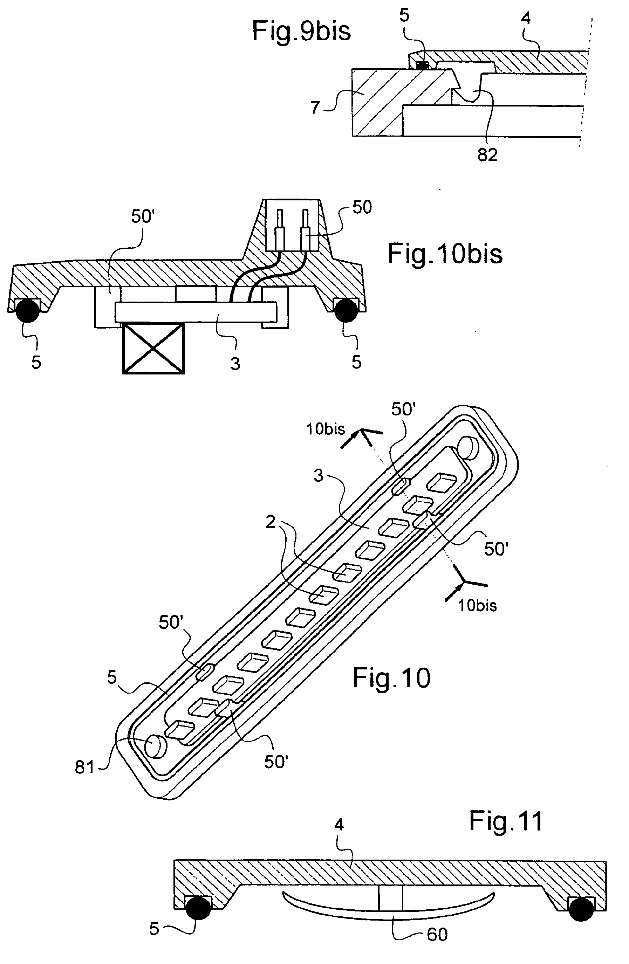

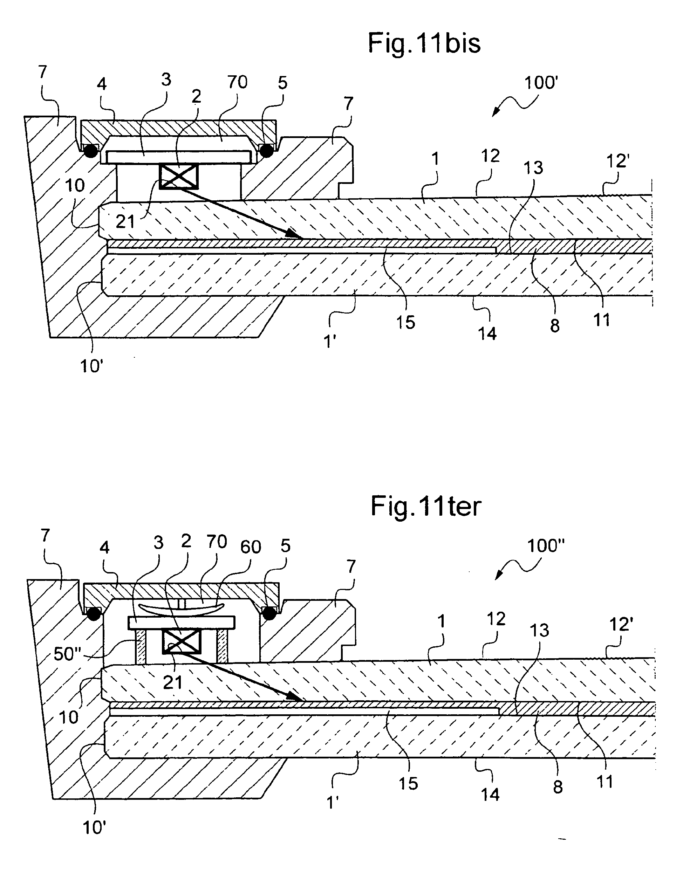

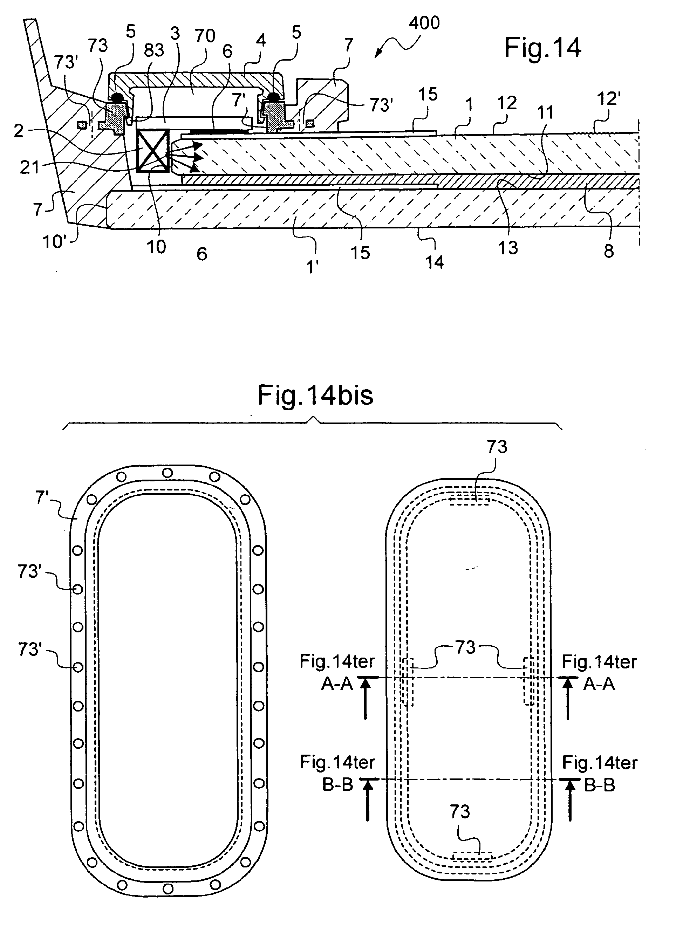

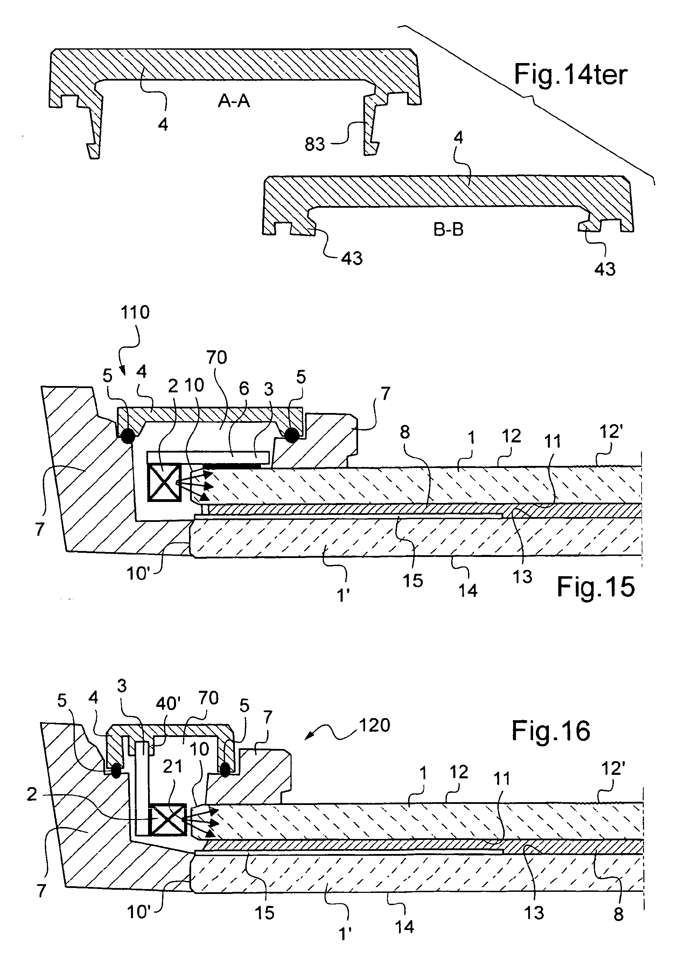

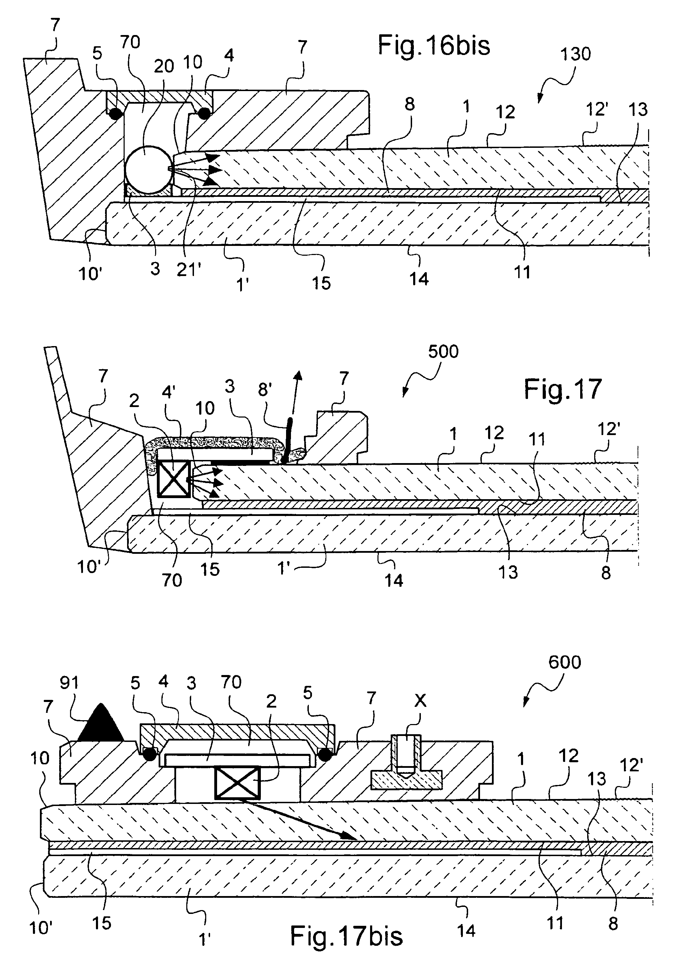

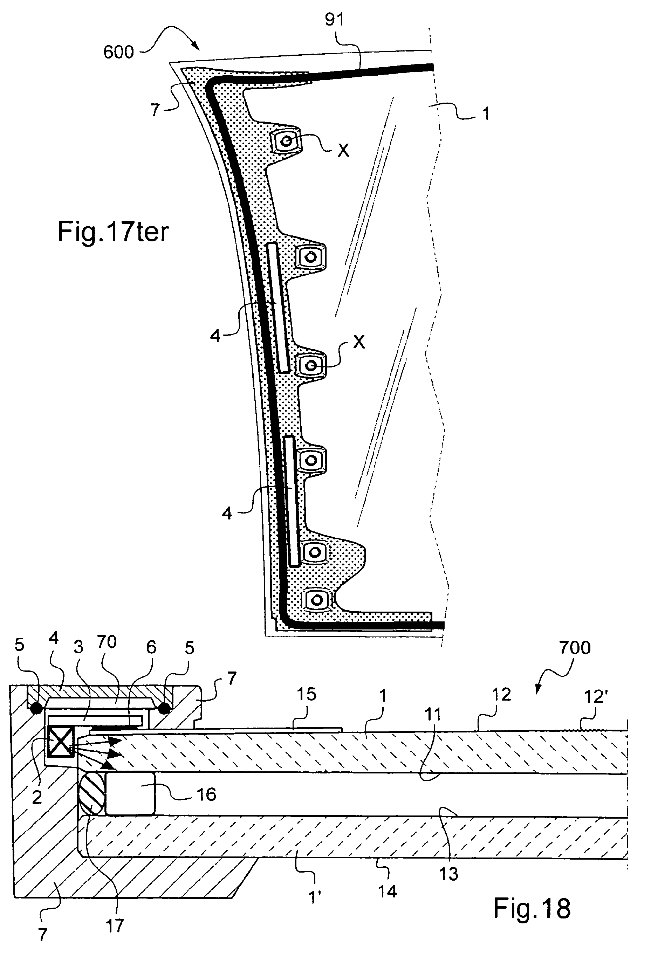

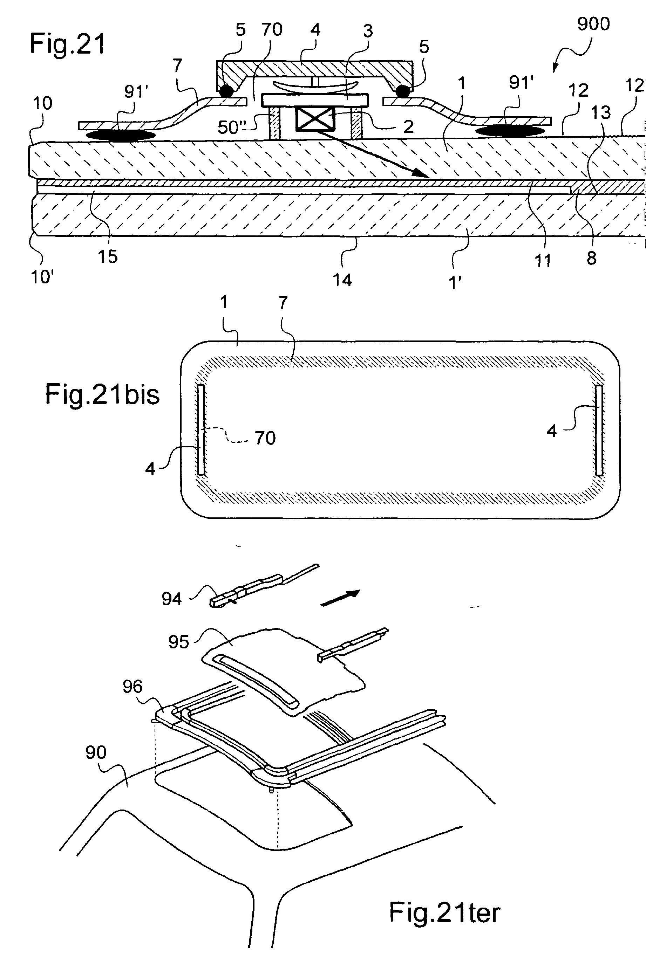

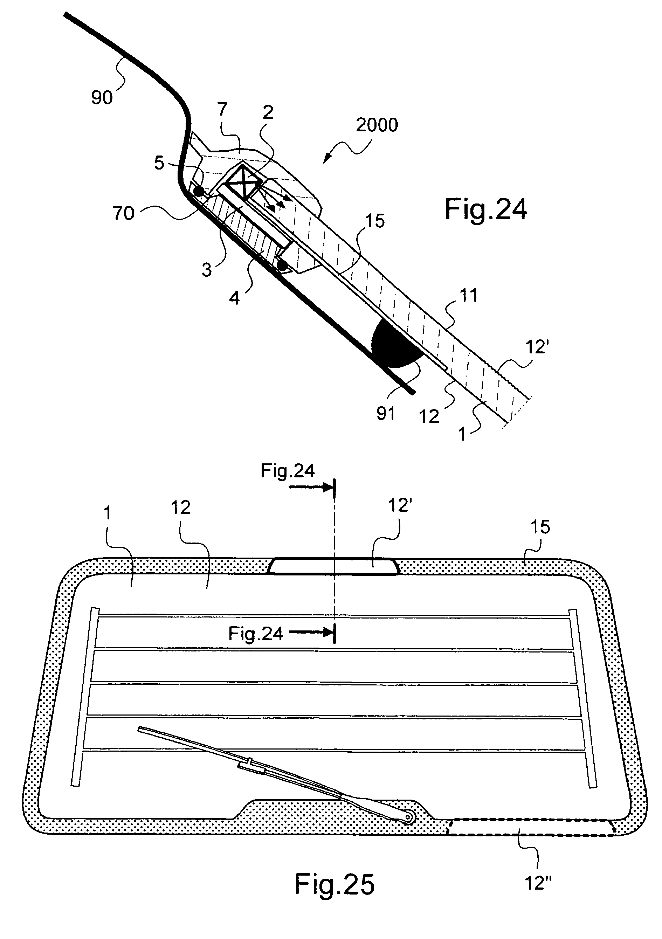

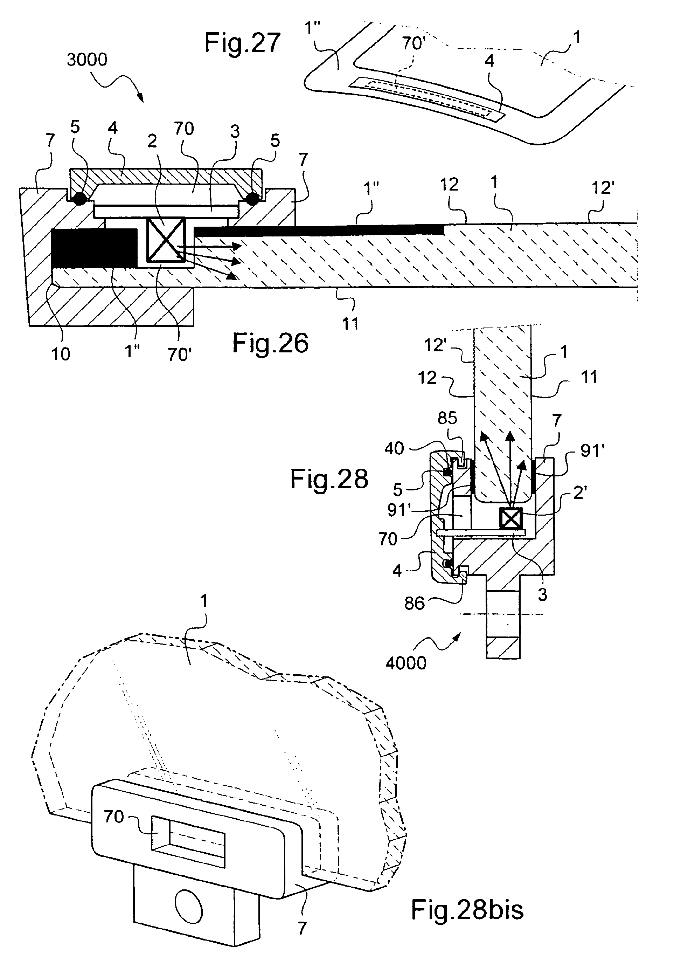

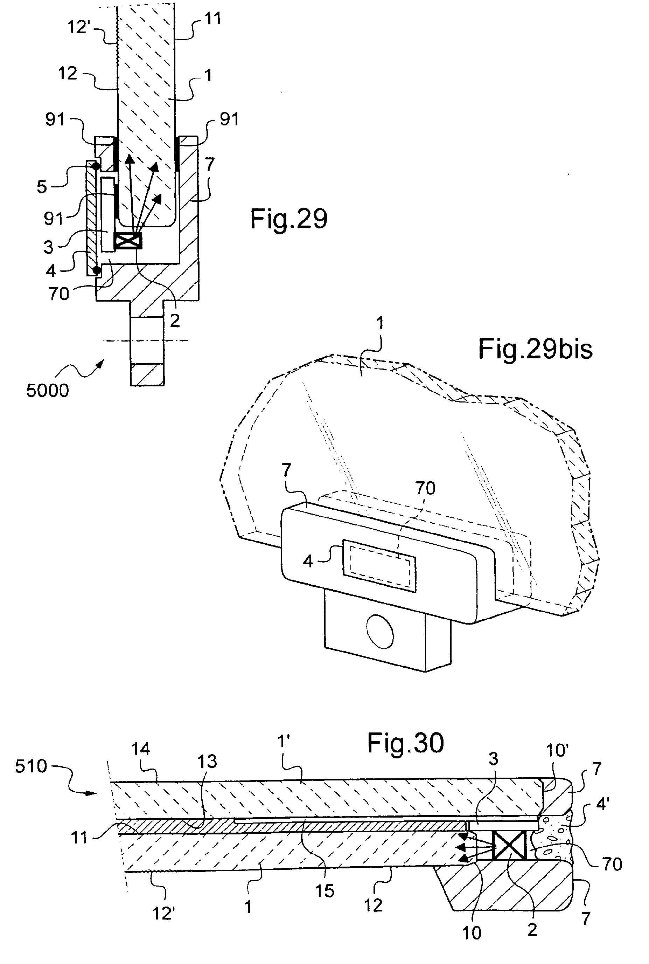

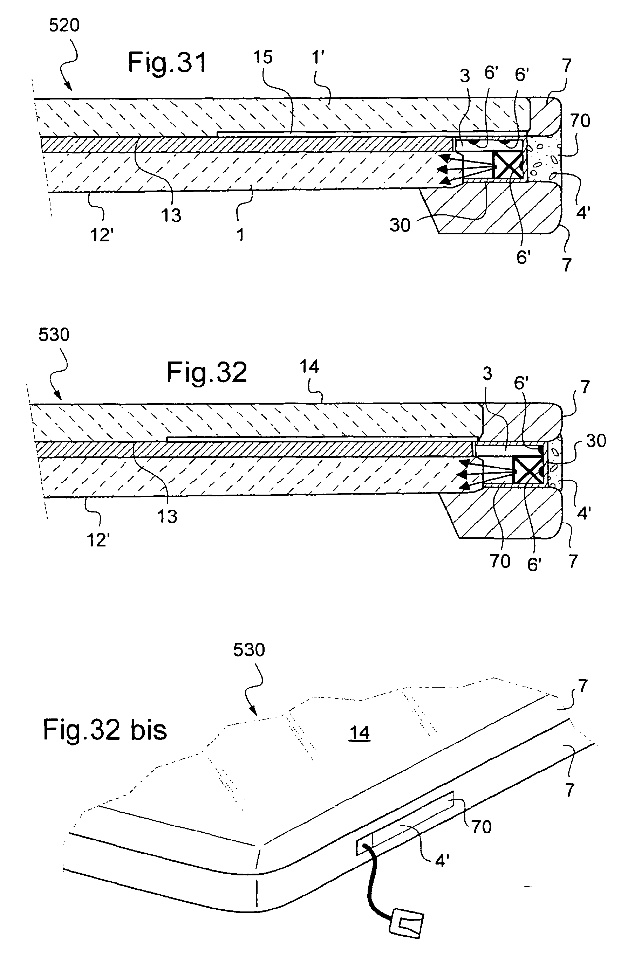

D'autres détails et caractéristiques avantageuses de l'invention apparaissent à la lecture des exemples de vitrages selon l'invention illustrés par les figures suivantes :
■ Les figures 1, 11 bis, 11 ter, 12 à 16, 16 bis, 17, 17 bis, 18, 19, 19 bis, 20 à 22, 22 bis, 22 ter, 24, 26, 28 à 32 représentent des vues schématiques partielles de coupe transversale des vitrages lumineux de véhicule dans différents modes de réalisation de l'invention,
■ Les figures 2 à 5 représentent des vues schématiques partielles de dessus du procédé de fabrication du vitrage lumineux de véhicule du mode de réalisation de l'invention de la figure 1,
■ Les figures 6, 6 bis, 6ter représentent des vues schématiques de coupe transversale d'un toit automobile avec un vitrage lumineux de véhicule de la figure 1,
■ Les figures 7 et 10 représentent chacune une vue schématique de dessous de capots selon l'invention,
■ Les figures 8, 9 et 9 bis représentent des vues schématiques partielles, de coupe des moyens de fixation d'un capot selon l'invention,
■ Les figures 10 bis et 11 représentent chacune une vue schématique de coté de capots selon l'invention,
■ La figure 14 bis représente une vue schématique partielle de dessus de la pièce de liaison utilisée dans le mode de réalisation de la figure 14,
■ Les figures 14 ter et 14 quater représentent respectivement une vue schématique partielle de dessus et une vue de coupe transversale de la pièce de liaison du mode de réalisation de la figure 14,
■ La figure 17 ter est une vue schématique partielle de dessus du vitrage lumineux de véhicule de la figure 17 bis,
■ La figure 21 bis est une vue schématique partielle de dessus du vitrage lumineux de véhicule de la figure 21,
■ La figure 21 ter représente un toit ouvrant pouvant utiliser le vitrage de véhicule de la figure 21,
■ La figure 25 représente une vue schématique de face du vitrage lumineux de véhicule dans le mode de réalisation de l'invention de la figure 24,
■ La figure 27 représente une vue schématique partielle de côté en élévation du vitrage lumineux de véhicule dans le mode de réalisation de l'invention de la figure 26,
■ Les figures 28 bis et 29 bis représentent des vues schématiques en élévation des vitrages lumineux de véhicule des figures 28 et 29,
■ La figure 32 bis représente une vue schématique partielle de dessus du vitrage lumineux de véhicule dans le mode de réalisation de l'invention de la figure 32.

On précise que pour un souci de clarté les différents éléments des objets représentés ne sont pas nécessairement reproduits à l'échelle.

En outre, sur les figures, les rayons lumineux ne suivent pas nécessairement rigoureusement les lois de l'optique.

La figure 1 représente une vue schématique partielle de coupe d'un vitrage lumineux de véhicule 100 dans un premier mode de réalisation de l'invention.

Ce vitrage 100 comprend un vitrage feuilleté comportant :
- une première feuille transparente 1, par exemple rectangulaire, présentant une première face principale 11 et une deuxième face principale 12, et une tranche 10, par exemple une feuille de verre silicosodocalcique, d'épaisseur égale à 2,1 mm,
- une deuxième feuille de verre 1', éventuellement pour une fonction de contrôle solaire, teintée (verre VENUS VG10 par exemple dans la société Saint-Gobain) et/ou recouverte d'un revêtement de contrôle solaire, d'épaisseur égale à 2,1 mm.

La deuxième feuille de verre est feuilletée 1' par un intercalaire de feuilletage 8, par exemple un PVB 8 d'épaisseur 0,76 mm.

Deux profilés 3 support de diodes électroluminescentes 2 s'étendent en bordure par exemple longitudinale et sont fixés en périphérie de la deuxième face 12 de la première feuille de verre 1 par un collage 6 ou un adhésif double face.

Chaque profilé support 3 est monolithique, mince, d'épaisseur égaie à 0,6 mm (5 mm max de préférence), large de 7 mm, long de 20 cm. Il peut être de section rectangulaire, métallique ou un PCB classique. La longueur d'appui du profilé sur la deuxième face 12 peut être typiquement inférieure à 7 mm.

En variante, le profilé support de diodes a une section en L, U, J ...

Les diodes électroluminescentes comportant chacune une puce émettrice 2 apte à émettre un ou plusieurs rayonnements dans le visible guidé(s) dans la première feuille 1. Les diodes sont de petites tailles typiquement quelques mm ou moins, notamment de l'ordre de 2x2x1 mm, sans optique (lentille) et de préférence non pré-encapsulées pour réduire au maximum l'encombrement.

Dans la configuration illustrée, la face émettrice est latérale (parallèle au profilé 3). On réduit au maximum la distance entre la face émettrice latérale et la tranche, par exemple de 5 mm. La distance entre la face émettrice latérale et la tranche est de 1 à 2 mm. La direction principale d'émission est perpendiculaire à la face de la puce semi-conductrice, par exemple avec une couche active à multi puits quantique, de technologie AlInGaP ou autres semi-conducteurs. Le cône de lumière est un cône de type lambertien, de +/-60°.

L'extraction de la lumière 12' peut se faire via la deuxième face 12 qui est par exemple - la face intérieure au véhicule notamment dans le cas d'un toit.

En variante on choisit des LED UV, notamment dans l'UVA, pour exciter des luminophores sur la face 12 par exemple.

L'extraction 12' est réalisée par tout moyen de diffusion à la surface de la deuxième face 12: sablage, attaque acide, couche diffusante, sérigraphie... ou en variante par gravure laser dans la première feuille 1.

Pour un groupe de diodes donné, on définit un espace des rayonnements émis entre chaque diode (puce) et la tranche de la première feuille, dit espace de couplage optique, de préférence qui est un milieu gazeux, typiquement de l'air, dépourvu de colle.

Chaque puce et l'espace des rayonnements émis doivent être protégés de toute pollution : eau, chimique etc, ceci à long terme comme pendant la fabrication du vitrage 100.

Or de manière connue, il est utile de pourvoir le vitrage d'un surmoulage polymérique 7, par exemple épais de 2,5 mm environ, en bordure du vitrage, et de préférence sur tout le pourtour du vitrage (ici feuilleté) et d'au moins la deuxième face 12.

Pour une encapsulation de type Flush, pour les toits en particulier, on préfère laisser la face 14 du deuxième verre 1' libre. L'encapsulation 7 est alors dite biface.

Pour masquer la source, voire supprimer la lumière parasite sortante vers le haut, par la feuille 1' on peut utiliser un élément de masquage périphérique 15 sur la face 13 par exemple un émail opaque (noir...) et/ou un réflecteur (argenture etc).

Cet élément de masquage périphérique 15 peut aussi servir pour masquer la fixation à la carrosserie.

Le profilé peut aussi être fixé sur la face 13 pouvant masquer la source notamment).

En variante, l'encapsulation 7 est alors dite triface et l'élément de masquage 15 peut être retiré éventuellement.

Le surmoulage 7 sert classiquement de bonne finition esthétique et/ou permet d'intégrer d'autres éléments ou fonctions (inserts de renforcement...).

Le surmoulage 7 par exemple présente une lèvre d'étanchéité entre le vitrage et le véhicule (non montrée en figure 1, cf. figure 6).

Le surmoulage 7 est par exemple en polyuréthane noir, notamment en PU-RIM (Reaction In Mold en anglais).

Le surmoulage 7 selon l'invention présente deux évidements 70 par exemple ovales, comme montré en figure 2. Les évidements 70 logeant chacun une barrette de diodes (les diodes sur le profilé support 3) comme montré en figure 3.

Le surmoulage 7 participe à la protection des diodes, donc à l'étanchéité à long terme au(x) fluide(s) (eau liquide, produit de nettoyage, voire eau vapeur...) tout en gardant ses fonctionnalités d'origine.

Afin de limiter au maximum la largeur de surmoulage contre la tranche du vitrage, par exemple une largeur inférieure à 10 mm, la première feuille 1 présente aussi un évidement marginal ou dit de bord, évidement marginal donc débouchant à la limite du bord longitudinal de la feuille (bord de d'injection) et à faible rayon de découpe pour avoir une longue zone de positionnement dans l'évidement, comme montré en pointillés sur les figures 2 à 5. Cet évidement de bord accueille les parties inférieures des deux évidements du surmoulage 70.

Dans une variante avec un joint prémonté remplaçant le surmoulage, un tel évidement sert aussi pour avoir un clair de vitre le plus grand possible.

Pour compléter l'étanchéité aux fluides de chaque barrette de diodes, on utilise en outre
- un capot 4 de couverture des diodes s'étendant le long d'une bordure de la deuxième face 12, dépassant de la tranche 10 d'injection; capot avec une face générale dite interne orientée vers la première feuille,
- un élément interfacial 5 pour l'étanchéité interfaciale au(x) fluide(s), agencé entre la face interne du capot et la face supérieure (face libre externe) de l'élément fonctionnel 7 à proximité de l'évidement 70, élément interfacial qui est un joint d'étanchéité, en EPDM, en forme de cordon large de 5mm dans une rainure 40 sur la face interne du capot (cf. vue de détail de la figure 1).

Le capot 4 est une pièce plastique de forme générale plane, de contour rectangulaire (avec des bords éventuellement arrondis) comme illustré en figure 4 ou en figure 7.

Le capot est parallèle à la première feuille.

Comme illustré en figures 7 et 8 ; le capot 4 est solidaire de l'élément fonctionnel 7, par des moyens de fixation réversibles par exemple deux vis 81, traversant le capot et dépassant de la face interne.

Ces vis sont reçues dans contres dépouilles locales de l'élément fonctionnel (7), à savoir des trous filetés 71 et de préférence entre le cordon de joint 5 et le bord de l'évidement.

L'élément d'étanchéité interfacial 5 est une matière comprimée, l'étanchéité par compression de la matière étant réalisée par un effort de fermeture desdits moyens de fixation du capot 81.

Le capot 4 est ainsi facilement démontable pour insérer des diodes ou les changer.

En première variante de capot, montrée en figure 9 et 9bis, les moyens de fixation du capot sont deux moyens de clipsage 82 reçus dans deux contres dépouilles locales 72 de l'élément fonctionnel 7 de préférence entre le cordon de joint 5 et le bord de l'évidement.

Dans une deuxième variante de capot (alternative ou cumulative de la première) présentée en figure 10 et 10 bis, le profilé support 3 de diodes 2 est tenu par le capot 4 par exemple par des crochets 50'.

Le design du capot permet ainsi l'intégration de la barrette de diodes et permet également la focalisation de la barrette c'est-à-dire le bon positionnement de la barrette par rapport à la tranche d'injection.

Le capot peut comporter en outre des surfaces ou butées pour la référence dans le logement du surmoulage.

En outre le capot est pourvu d'un évidement 50 borgne ou traversant (rendu étanche par mousse ou joint d'étanchéité ...) pour le passage de la connectique.

Dans une troisième variante de capot (alternative à la deuxième variante) présentée en figure 11, la face interne est pourvue d'un moyen de positionnement précis, donc d'alignement, 60 du profilé 3 support des diodes, sous forme d'un poussoir 60 (forme concave vers l'opposé de la feuille 1) appuyant sur la face externe du profilé 3.

Le design du capot 4 comporte donc un élément 60 permettant d'exercer un effort sur la barrette de diodes préalablement fixée à la feuille.

On peut choisir des diodes émettant en lumière blanche ou colorée pour un éclairage d'ambiance, de lecture ...

On peut bien sûr prévoir plusieurs barrettes sur des bords distincts, et/ou avec des fonctions distinctes (choix adapté de la puissance, de la lumière émise, de la position et de l'étendue des zones extraction).

L'extraction, par exemple une couche diffusante 12', peut former un éclairage d'ambiance.

Le vitrage 100 peut former par exemple un toit panoramique fixe de véhicule terrestre, ou en variante de bateau...

Le toit est monté par l'extérieur comme montré en figure 6, sur la carrosserie 90 via un adhésif 91. De préférence l'élément fonctionnel 7 présente alors une lèvre d'étanchéité.

En première variante montrée en figure 6 bis et figure 6 ter, on a modifié l'encapsulation du vitrage 100 de la manière suivante :
- on supprime la lèvre,
- on rajoute contre l'encapsulation 7 un tubing en EPDM 92, autrement dit, un profil d'étanchéité à cellules fermées ou un profil d'étanchéité à lèvres multiples, le profil s'écrasant après montage sur le véhicule,
- on ajoute des inserts de fixation du vitrage 93 pour l'ouverture,

La première feuille 1 (la deuxième face) est du côté intérieur du véhicule. L'extraction est de préférence par la face 12.

Comme montré en figure 5, la création d'évidement(s) 70 et l'intégration des barrettes de diodes avec le capot4 est compatible avec l'usage de tels inserts 93.

La figure 11bis représente une vue schématique partielle de coupe transversale d'un vitrage lumineux de véhicule 100' dans une variante du premier mode de réalisation de l'invention présenté en figure 1.

Le vitrage 100' diffère du vitrage 100 en ce que la tranche d'injection est remplacée par un bord d'injection, donc avec un évidement 70 une barrette 3 de diodes 2, un capot 4 (essentiellement voire entièrement) au-dessus de la deuxième face. Le surmoulage est triface.

La figure 11ter représente une vue schématique partielle de coupe transversale d'un vitrage lumineux de véhicule 100" dans une variante du premier mode de réalisation de l'invention.

Le vitrage 100" diffère du vitrage 100' par la présente de butées 50" pour le positionnement des diodes et du poussoir déjà décrit en figure 11.

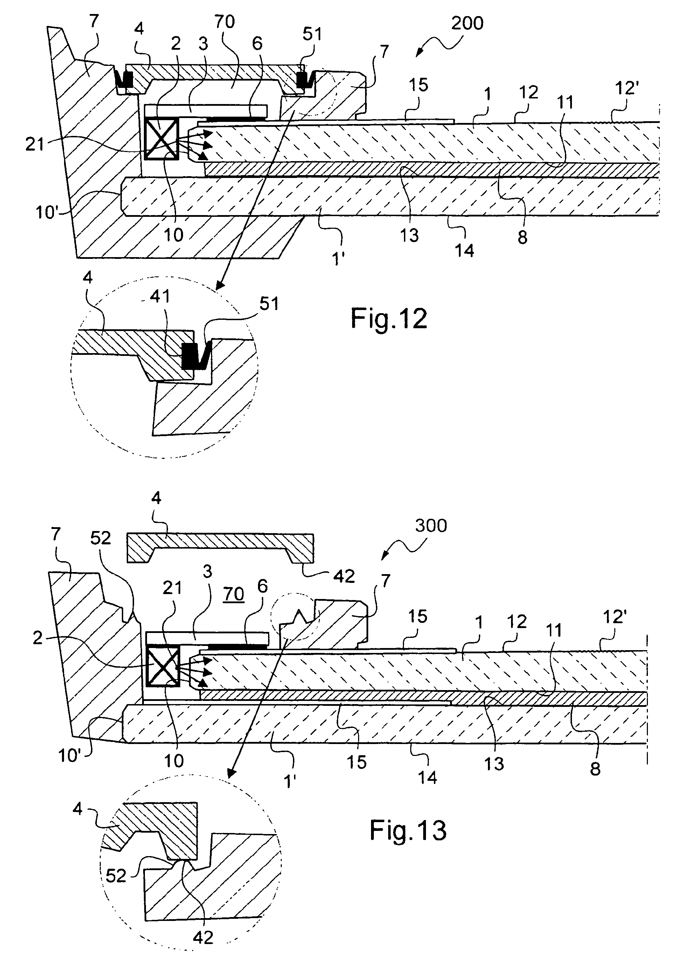

La figure 12 représente une vue schématique partielle de coupe transversale d'un vitrage lumineux de véhicule 200 ans un deuxième mode de réalisation de l'invention.

Le vitrage lumineux de véhicule 200 diffère du vitrage 100 par la position et le type d'élément d'étanchéité interfacial.

En effet, il s'agit d'un joint d'étanchéité 51, en caoutchouc élastomère ou TPE dans une rainure 41 ménagée sur le coté externe du capot 4 (voir vue de détail) et en contact avec un bord de l'évidement de l'élément fonctionnel 7.

Les bords de la face interne sont en simple appui sur l'élément fonctionnel 7

La figure 13 représente une vue schématique partielle de coupe transversale vitrage lumineux de véhicule 300 dans un troisième mode de réalisation de l'invention avec un capot à fixer ou fixé (voir vue de détail).

Le vitrage lumineux de véhicule 300 diffère du vitrage 100 par le type d'élément d'étanchéité interfaciale.

En effet, il s'agit d'un profil d'étanchéité 52 sur l'élément fonctionnel 7, à proximité de l'évidement de logement de la diode 70, par exemple dans une tranchée, élément fonctionnel alors choisi de préférence en TPE ou caoutchouc élastomère.

Le profil est obtenu à partir d'un usinage du moule (permettant une simplification de la conception du capot ou plus largement de l'outillage servant à fabriquer l'élément fonctionnel.

Lors de la mise en place du capot 4, l'effort de fermeture (vissage, clipsage, voire collage ...) entraine une compression du profil d'étanchéité (voir vue de détail).

La figure 14 représente une vue schématique partielle de coupe transversale d'un vitrage lumineux de véhicule 400 dans un quatrième mode de réalisation de l'invention. La figure 14bis représente une vue schématique partielle de dessus de la pièce de liaison 7' utilisée dans le quatrième mode de réalisation de la figure 14. Les figures 14 ter et 14quater représentent respectivement une vue schématique partielle de dessus du capot 4 et une vue de coupe transversale du capot 4 dans le mode de réalisation de la figure 14.

Seules Les différences avec le vitrage 100 sont présentées.

Le capot 4, fixé indirectement à l'élément fonctionnel 7, est fixé sur une pièce de liaison 7' sous forme d'un cadre posé sur la première feuille et sur la face externe du surmoulage 7, par exemple ovale logée (principalement) dans l'évidement 70 et cadre avec une partie dans le surmoulage (des ouvertures 73' étant remplis par le surmoulage).

Le joint d'étanchéité interfacial 5 est agencé entre la face interne du capot et la face libre externe de la pièce de liaison 7' en matière PP, PA66, PBT.

Les moyens de fixation réversibles du capot sont des moyens de clipsage par exemple ponctuels et agencés sur la face interne du capot, par exemple quatre ergot(s) de clipsage 83 faisant partie intégrante du capot (cf figure 14quater). La face interne du capot présente donc des zones 43 sans ergots.

Les moyens de clipsage 83 sont clipsés sur l'intérieur de la pièce de liaison 7', (cf. figure 14 bis) ou en variante sur l'extérieur.

En variante la pièce de liaison est collée sur la première feuille (et/ou sur le surmoulage).

La figure 15 représente une vue schématique partielle de coupe transversale d'un vitrage lumineux de véhicule 110 dans une variante du premier mode de réalisation de l'invention présenté en figure 1.

Le vitrage 110 diffère du vitrage 100 par l'absence d'évidement marginal de la première feuille (feuilles 1 et 1' étant bord à bord), impliquant éventuellement une plus grande largeur d'encapsulation latérale.

L'évidement 70 est ici borgne dans l'épaisseur (fond formé par l'encapsulation et non par la face 13 de la deuxième feuille 1').

La figure 16 représente une vue schématique partielle de coupe transversale d'un vitrage lumineux de véhicule 120 dans une variante du premier mode de réalisation de l'invention présenté en figure 1.

Le vitrage 120 diffère du vitrage 100 par le type des diodes 2', la position et la fixation du profilé support 3.

En effet, ici les diodes 2' sont à émission principale normale au profilé (face émettrice 21 normale).

Le profilé 3 est parallèle à la tranche d'injection 10 et fixé dans un logement 40' prévu en face interne du capot.

Le vitrage 110 diffère aussi du vitrage 100 par l'absence d'évidement marginal de la première feuille (feuilles 1 et 1' bord à bord), impliquant éventuellement une plus grande largeur d'encapsulation latérale.

La figure 16bis représente une vue schématique partielle de coupe transversale d'un vitrage lumineux de véhicule 130 dans une variante du premier mode de réalisation de l'invention présenté en figure 1.

Le vitrage 130 diffère du vitrage 100 par l'emploi d'une fibre optique 20 avec une face émettrice latérale 21' fibre posée (calée), par exemple par un profilé support 3" sur la face 13. La source primaire de lumière peut être une diode (non représentée) également dans l'évidement 70.

On utilise par exemple la fibre optique de 3M dite 3M™ Precision Lighting Elements.

La figure 17 représente une vue schématique partielle de coupe transversale d'un vitrage lumineux de véhicule 500 dans un cinquième mode de réalisation de l'invention.

Dans le vitrage 500 le capot et l'élément d'étanchéité interfaciale du vitrage 100 sont remplacés par un mastic 4' comportant un dispositif d'arrachement par un fil 8'.

La figure 17bis représente une vue schématique partielle de coupe transversale d'un vitrage lumineux de véhicule 600 dans un sixième mode de réalisation de l'invention.

Le vitrage 600 diffère du vitrage 100' de la figure 11 bis par le fait que le surmoulage est monoface, comprend des supports de fixation surmoulés X d'un élément de véhicule (pare-soleil...) sur le vitrage est de préférence s'étend le long de deux bords du vitrage (sans former un cadre) comme montrée en figure 17ter.

Le collage 91 à la carrosserie est périphérique sur le surmoulage et plus proche de la bordure que l'évidement 70.

Le vitrage 600 est par exemple un pavillon automobile.

En variante du surmoulage on utilise une pièce métallique (cadre etc) collé sur la deuxième face 12, avec le ou les évidements 70 et les supports de fixation.

En variante, les supports de fixation surmoulés servent à fixer du vitrage sur un élément de véhicule (carrosserie...), on supprime donc la colle 91.

La figure 18 représente une vue schématique partielle de coupe transversale d'un vitrage lumineux de véhicule 700 dans un septième mode de réalisation de l'invention.

Le vitrage 600 diffère du vitrage 100 par l'absence d'évidement marginal de la première feuille (feuilles 1 et 1' étant bord à bord), impliquant éventuellement une plus grande largeur d'encapsulation latérale.

L'évidement 70 est ici borgne dans l'épaisseur (fond formé par l'encapsulation et non par la face 13 de la deuxième feuille 1').

En outre le vitrage n'est plus feuilleté mais un double vitrage avec un joint 17 et un espaceur périphérique (remplaçant l'intercalaire 8), formant un vitrage isolant ou sous vide (avec d'autres espaceurs éventuels).

L'élément de masquage 15 (émail noir par exemple) du montage sur la carrosserie est sur la deuxième face 12 et/ou face 11).

Ce double vitrage convient particulièrement dans les bus ou les trains.

L'un des verres peut en outre être feuilleté avec un verre additionnel.

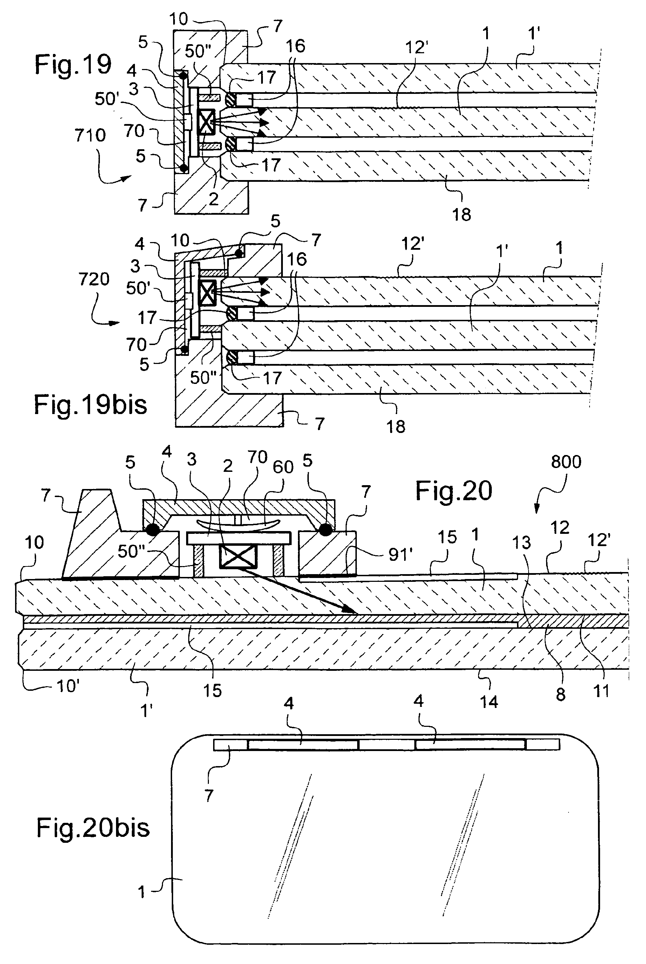

La figure 19 représente une vue schématique partielle de coupe transversale d'un vitrage lumineux de véhicule 710 dans une variante du septième mode de réalisation de l'invention.

Le vitrage 710 diffère du double vitrage 700 précédent
- d'abord par l'ajout d'un vitrage additionnel 18 pour former un triple vitrage, la première feuille 1 étant par exemple la feuille centrale,
- par les postions latérales (en regard de la tranche d'injection 10, parallèle à la tranche 10) de l'évidement 70, de la ou des barrettes de diodes 2,3 et du capot 4.

En particulier ce triple vitrage convient pour les trains.

La figure 19bis représente une vue schématique partielle de coupe transversale d'un vitrage lumineux de véhicule 720 dans une autre variante du septième mode de réalisation de l'invention.

Le vitrage 720 diffère du vitrage 710 précédent en ce que la première feuille est une feuille extérieure et de préférence pour éviter une surépaisseur d'encapsulation. Le capot est angulaire avec une extension de type faciale sensiblement parallèle à la deuxième face et le joint d'étanchéité 5 est reporté en conséquence.

La figure 20 représente une vue schématique partielle de coupe transversale d'un vitrage lumineux de véhicule 800 dans un huitième mode de réalisation de l'invention.

Le vitrage 800 diffère du vitrage 100' de la figure 11bis par le fait que l'élément fonctionnel est monoface, s'étend le long d'un bord du vitrage (sans former un cadre) comme montrée en figure 20bis.

L'élément fonctionnel 7 est un joint polymérique par exemple extrudé (en EPDM ...) avec le ou les évidements et collé sur la deuxième face 12 par de la colle 91' par exemple un adhésif double face (acrylique ...).

La figure 21 représente une vue schématique partielle de coupe transversale d'un vitrage lumineux de véhicule 900 dans un neuvième mode de réalisation de l'invention.

Le vitrage 900 diffère du vitrage 100' de la figure 11bis par le fait que l'élément fonctionnel est monoface, par exemple avec deux évidements et capotage sur deux bords opposés comme montrée en figure 21bis.

L'élément fonctionnel 7 est un cadre métallique, plastique (en EPDM ...) collé sur la deuxième face par de la colle 91' par exemple mastic PU monocomposant.

La figure 21ter représente une vue schématique en élévation de véhicule pouvant intégrer le vitrage 900 du neuvième mode de réalisation de l'invention.

On utilise ainsi deux supports mobiles 94, sur lesquels le cadre vient se monter, un occulteur 95, un ensemble fixé sur la carrosserie 90 du véhicule, les supports mobile glissant sur l'ensemble.

La figure 22 représente une vue schématique partielle de coupe transversale d'un vitrage lumineux de véhicule 1010 dans un dixième mode de réalisation de l'invention.

Le vitrage 1010 diffère du vitrage 100 en ce que
- il est monolithique,
- sa fixation à la carrosserie 90 par la colle 91 est sur la première face 11,
- la deuxième face 12 est la face externe du véhicule,
- l'encapsulation est triface avec l'élément de masquage 15 (émail opaque par exemple) sur la face 11.

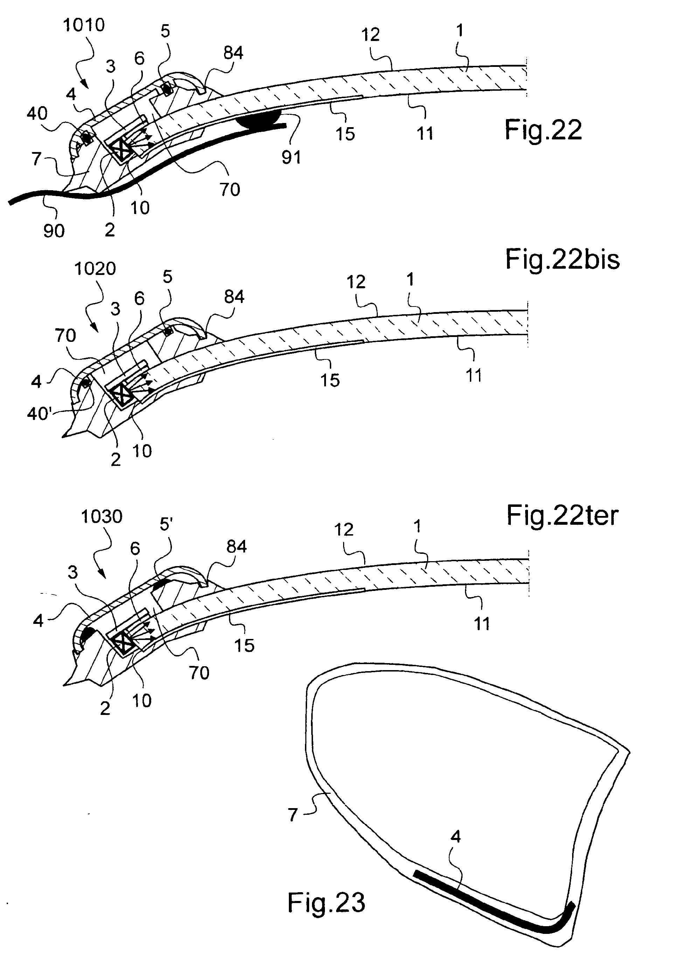

Il s'agit par exemple d'une vitre latérale notamment d'automobile comme montré en figure 23.

Ici le capot est visible est sert aussi de pièce d'aspect, d'enjoliveur, avec une forme courbée par exemple et le surmoulage présente des rainures 84 pour positionner le capot.

La figure 22bis représente une vue schématique partielle de coupe transversale d'un vitrage lumineux de véhicule 1020 dans une variante du dixième mode de réalisation de l'invention.

Le vitrage 1010 diffère du vitrage 1020 précédent en ce que le surmoulage présente des rainures pour recevoir le joint d'étanchéité interfaciale 5.

La figure 22ter représente une vue schématique partielle de coupe transversale d'un vitrage lumineux de véhicule 1030 dans une autre variante du dixième mode de réalisation de l'invention.

Le vitrage 1010 diffère du vitrage 1020 précédent en ce que le joint d'étanchéité interfaciale 5 est remplacé par de la colle réversible 5'.

La figure 24 représente une vue schématique partielle de coupe transversale d'un vitrage lumineux de véhicule 2000 dans un onzième mode de réalisation de l'invention.

Le vitrage 1010 diffère du vitrage 100 en ce que
- il est monolithique,
- l'encapsulation est triface avec l'élément de masquage 15 (émail
   opaque par exemple) sur la face 11.

Il s'agit par exemple d'une lunette arrière de véhicule
- avec une zone lumineuse 12' sur la face externe 11, donc vue de l'extérieur (moyen de repérage du véhicule, feux stop..),
- avec une zone lumineuse 12" sur la face interne 12, donc pour l'intérieur.

La figure 26 représente une vue schématique partielle de coupe transversale d'un vitrage lumineux de véhicule 3000 dans un douzième mode de réalisation de l'invention.

Le vitrage 3000 diffère du vitrage 100 en ce que
- il est monolithique, est de préférence en plastique, polycarbonate,
- la tranche d'injection est remplacée par un bord d'injection, donc avec l'évidement 70, la barrette 3 de diodes 2, le capot 4 (essentiellement voire entièrement) au-dessus de la deuxième face 12,
- le surmoulage est triface.

En outre la deuxième face 12 comprend un trou marginal 70' (limité dans sa longueur comme montré en figure 27) prolongeant l'évidement 70.

Plus précisément la feuille est bimatière, c'est-à-dire transparente et avec une zone périphérique noire 1" servant pour le masquage de la fixation (ici associé à la face 12 par exemple).

Les moyens de fixation peuvent être liés au PC.

Il est envisageable de surmouler des éléments taraudés dans le PC ou de tarauder le PC après (pour permettre le vissage direct du capot dans le PC).

La figure 28 représente une vue schématique partielle de coupe transversale d'un vitrage lumineux de véhicule 4000 dans un treizième mode de réalisation de l'invention.

Le vitrage 3000 diffère du vitrage 100 en ce que
- il est monolithique,
- le surmoulage est remplacé par une pièce de fixation (holder en anglais), par exemple en PA66, PBT, de lève-vitre car il s'agit d'une vitre latérale comme montré en figure 28bis.

La pièce 7 est évidée et collée sur la vitre par de la colle (permanente) 91'. Les moyens de fixation sont par exemple des crochets latéraux 85 venant sur des encoches de la pièce 7.

Le profilé support 3 et les diodes 2' sont comme décrits en figure 19bis.

La figure 29 représente une vue schématique partielle de coupe transversale d'un vitrage lumineux de véhicule 5000 dans une variante du treizième mode de réalisation de l'invention.

Le vitrage 5000 diffère du vitrage 4000 par le positionnement du profilé et le type de diodes et la fixation du capot (comme pour la figure 1).

La figure 30 représente une vue schématique partielle de coupe transversale d'un vitrage lumineux de véhicule 510 dans un quinzième mode de réalisation de l'invention.

Les différences avec le vitrage 100 seules sont présentées.

L'évidement du surmoulage est de type latéral : rainure 70 ici unique ou en variante multiple (pour plusieurs barrettes de diodes par exemple) en regard de la tranche 10 de la première feuille.

Le vitrage 510 diffère aussi du vitrage 100 par le moyen d'étanchéité. En effet, les capots et les éléments d'étanchéité interfaciale sont remplacés par un mastic (essentiellement) latéral 4' comportant de préférence un dispositif d'arrachement par un fil bouchant la rainure 70.

Enfin le profilé est fixé sur la face interne 13 de la deuxième feuille (supprimant en outre la lumière parasite sortant par le haut).

La figure 31 représente une vue schématique partielle de coupe transversale d'un vitrage lumineux de véhicule 520 dans un seizième mode de réalisation de l'invention

Les différences avec le vitrage 510 seules sont présentées.

Pour faciliter le montage, la barrette de diodes est fixée par collage 6' dans un insert, métallique par exemple, de section en U 30, monté en force dans la rainure.

La figure 32 représente une vue schématique partielle de coupe transversale d'un vitrage lumineux de véhicule 530 dans un dix septième mode de réalisation de l'invention.

Seules les différences avec le vitrage 520 de la figure 31 sont présentées.

Pour faciliter le montage, la barrette de diodes est fixée par collage 6' dans un insert, métallique par exemple, de section en U 30, monté en force dans la rainure.

La rainure est partielle dans sa longueur comme montré en figure32bis.

## Revendications

1. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) comportant :
- une première feuille en verre minéral ou organique (1) présentant une première face principale (11) et une deuxième face principale (12) et une tranche (10),
- une source lumineuse périphérique (2, 2', 20) avec une face émettrice (21, 21'), choisie parmi une fibre optique (20) et des diodes électroluminescentes (2, 2') comportant chacune une puce semi-conductrice sur un profilé support des diodes (3), la face émettrice étant en regard de la tranche dite d'injection (10) ou d'un bord de la deuxième face (12) dit d'injection pour une propagation de la lumière injectée visible et/ou ultraviolet dit UV dans l'épaisseur de la première feuille, la première feuille (1) jouant alors le rôle de guide de la lumière injectée,
- pour former au moins une zone lumineuse :
- des moyens d'extraction de la lumière guidée via la première et/ou la deuxième face principale, qui sont des moyens de diffusion en surface de la première et/ou de la deuxième face principale (12') ou des moyens de diffusion en volume dans la première feuille,
- et/ou lorsque la lumière injectée est UV, des moyens de conversion de la lumière UV en lumière visible via la première et/ou la deuxième face principale, qui sont des luminophores notamment sur la première et/ou de la deuxième face principale
- un élément fonctionnel périphérique rapporté (7), lié à la première feuille, qui est étanche au(x) fluide(s), notamment à l'eau liquide voire vapeur, s'étendant sur la tranche d'injection ou le bord d'injection, notamment un élément fonctionnel qui est choisi parmi un surmoulage ou un élément prémonté,
l'élément fonctionnel étant pourvu d'au moins un évidement (70) pour placer la source et permettre l'injection de ladite lumière dans le bord d'injection ou la tranche d'injection, - un élément de couverture (4, 4') de l'évidement (70) et de la source (2, 2', 20), étanche au(x) fluide(s), notamment à l'eau liquide voire vapeur, qui est choisi parmi :
- un capot (4) solidaire par des moyens de fixation (81, 82, 83, 86),
- à l'élément fonctionnel,
- et/ou à une pièce de liaison (7') notamment placée au moins en partie dans l'évidement et liée à l'élément fonctionnel et/ou liée à la première feuille,
- et/ou à la première feuille, notamment en verre organique le capot ayant une face générale dite interne orientée vers l'évidement (70),
le capot étant associé à un élément interfacial (5, 51, 52, 5'), pour l'étanchéité interfaciale au(x) fluide(s), notamment à l'eau liquide voire vapeur qui est agencé
- entre le capot et l'élément fonctionnel et/ou la pièce de liaison sous jacente et/ou la deuxième face,
- et/ou intégré au capot et en contact avec l'élément fonctionnel,
- et/ou encore intégré à l'élément fonctionnel et en contact avec le capot,
- un mastic de scellement (4') étanche au(x) fluide(s) couvrant la source et scellant l'élément fonctionnel rapporté (7).

2. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon la revendication 1 **caractérisé en ce que**
- l'élément de couverture (4, 4'), en regard du bord d'injection, est essentiellement facial c'est-à-dire au dessus et/ou sur la deuxième face ou en décalé de la deuxième face, en regard d'au moins l'espace des rayonnements émis avant l'injection, dit espace de couplage,
- ou l'élément de couverture (4, 4') est latéral en regard de ladite tranche d'injection, notamment un capot latéral (4), en regard de la tranche d'une deuxième feuille et/ou d'une troisième éventuelle feuille (18) dudit vitrage alors multiple (710, 720) notamment avec lame(s) de gaz (8) séparatrices des feuille(s) ou encore un mastic latéral (4') notamment dans ledit vitrage choisi multiple notamment feuilleté (510, 520, 530).

3. Vitrage lumineux de véhicule (100, 100', 100", 110, 120, 200, 300, 400, 500, 510, 520, 530, 600, 700, 710, 720, 1010, 1020, 1030, 2000, 3000) selon l'une des revendications précédentes **caractérisé en ce que** l'élément fonctionnel est surmoulé, polymérique (7) et **en ce que** le vitrage comporte de préférence entre l'encapsulation et le vitrage, notamment en verre minéral, une couche de primaire, mono, bi ou tri-composants, par exemple à base de polyuréthane, polyester, polyvinyle acétate, isocyanate.

4. Vitrage lumineux de véhicule (600, 800, 900) selon l'une des revendications précédentes **caractérisé en ce que** l'élément fonctionnel (7) est une pièce monoface sur la deuxième face (12), notamment un surmoulage ou une pièce collée, une pièce avec un support de fixation (X) d'un élément de véhicule sur le vitrage ou du vitrage sur un élément de véhicule, le long d'au moins un bord d'injection voire d'au moins deux bords opposés du vitrage.

5. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes **caractérisé en ce que** l'espace des rayonnements émis avant l'injection, dit espace de couplage est gazeux et/ou l'élément d'étanchéité interfaciale au(x) fluide(s), local, est en périphérie de la face interne du capot (4) ou sur un côté du capot (4), notamment l'élément d'étanchéité interfaciale au(x) fluide(s) forme un cordon (5, 51, 52, 91').

6. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes **caractérisé en ce que** la fixation de la source (2, 2', 20) au vitrage est réalisé en dehors de l'espace de couplage, notamment en dehors de la tranche d'injection (10) ou du bord d'injection et pour les diodes par la fixation du profilé support (3), notamment par collage ou adhésif double face ou clipsage sur l'une des faces de la première feuille (11, 12), notamment la deuxième face (12), ou sur l'une des faces (13, 14) d'une deuxième feuille (1') associée et en regard de la première feuille et dépassante de la tranche d'injection pour ladite fixation ou d'un intercalaire de feuilletage (8) ou sur la face interne du capot (4) ou sur l'élément fonctionnel (7), notamment sur une marche pour poser le profilé support (3).

7. Vitrage lumineux de véhicule (1030) selon l'une des revendications précédentes **caractérisé en ce que** l'élément d'étanchéité interfacial (5'),de préférence en périphérie du capot (4), est une colle réversible, faisant partie ou constituant lesdits moyens de fixation du capot (4) alors réversibles, de préférence un cordon de colle notamment en contact avec la face interne du capot, et l'élément fonctionnel (7) ou la pièce de liaison ou la deuxième face, notamment colle de type époxy bi-composant.

8. Vitrage lumineux de véhicule (100, 100', 100", 110, 120, 200, 300, 400, 600, 700, 710, 720, 800, 900, 1010, 1020, 2000, 3000, 4000, 5000) selon l'une des revendications 1 à 6 **caractérisé en ce que** l'élément d'étanchéité interfacial, de préférence en périphérie du capot (4), est une matière comprimée (5, 51, 52), l'étanchéité par compression de la matière étant réalisée par un effort de fermeture desdits moyens de fixation du capot, notamment l'élément d'étanchéité interfacial est choisi parmi :
- un joint (5, 51) polymérique par exemple en TPE, en EPDM notamment un joint torique, à lèvre(s) d'étanchéité, le joint étant notamment dans une rainure du capot (4), ou une rainure dans l'élément fonctionnel ou de la pièce de liaison ou de la deuxième face,
- un profil d'étanchéité (52) sur l'élément fonctionnel, choisi polymérique, par exemple lèvre(s) d'encapsulât ou de joint prémonté, notamment en EPDM, sur la face interne ou un côté du capot polymérique ; ou un profil d'étanchéité sur la pièce de liaison,
- une mousse éventuellement adhésivée notamment mousse acrylique, PU, caoutchouc, thermoplastiques élastomères, en TPE, en polyester, notamment en polyester caoutchouc monocomposant.

9. Vitrage lumineux de véhicule (100, 100', 100", 110, 120, 200, 300, 400 500, 600, 700, 710, 720, 800, 900, 1010, 1020, 2000, 3000, 4000, 5000) selon l'une des revendications précédentes **caractérisé en ce que** les moyens de fixation (81, 82) sont réversibles, les moyens de fixation sont choisis parmi :
- des moyens de clipsage (82, 83) agencés sur le capot, de préférence faisant partie intégrante du capot, (5, 51, 52, 91') et notamment reçus pour le clipsage dans une ou des zones d'accueil (72) de l'élément fonctionnel (7) et/ou de la pièce de liaison et/ou de la première feuille notamment organique,
- des moyens de clipsage (86), faisant partie intégrante du capot, de préférence en dehors dans la zone d'étanchéité et notamment reçus dans une ou des zones d'accueil de l'élément fonctionnel (7) et/ou de la pièce de liaison et/ou de la première feuille notamment organique,
- des moyens de vissage (81), dépassant de la face interne, de préférence dans la zone d'étanchéité, notamment entre l'élément d'étanchéité interfacial (5) et le bord de l'évidement (70).

10. Vitrage de véhicule à diodes électroluminescentes (400) selon l'une des revendications 1 à 9 **caractérisé en ce que** la pièce de liaison forme de préférence une pièce évidée monoface à contour fermé tel qu'un cadre.

11. Vitrage lumineux de véhicule (3000) selon l'une des revendications 1 à 10 **caractérisé en ce que** la première feuille (1) est en verre notamment organique, notamment en PC, avec un trou (70') borgne dans son épaisseur, de la deuxième face (12), par exemple un décrochement, pour loger la source en regard du bord d'injection.

12. Vitrage de véhicule à diodes électroluminescentes selon la revendication précédente **caractérisé en ce que** le trou (70') est sur tout le pourtour de la deuxième face (12) et le capot (4) forme un cadre notamment intégrant lesdits moyens de fixation.

13. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes **caractérisé en ce que** le vitrage comprend un élément de masquage de la source et d'éventuelle lumière parasite, et/ou de masquage de la fixation (91) du vitrage à la carrosserie (90) du véhicule par la deuxième face (12), l'élément de masquage pouvant être
- un partie de l'élément fonctionnel (7), notamment une encapsulation polymérique (suffisamment opaque, noire),
- et/ou un émail suffisamment opaque (15), sur la périphérie de la deuxième face et/ou sur la première face ou une face d'un film en feuille rapporté en regard de la première face notamment lorsque l'élément fonctionnel est monoface ou biface,
- et/ou une surface réfléchissante (15) sur la périphérie de la deuxième face et/ou sur la première face ou une face rapportée en regard de la première face,
- et/ou la première feuille est organique, bimatière transparente et opaque,
- la zone opaque (1") de la première feuille (1) sur la périphérie de la deuxième face (12) et/ou sur la première face, forme un masquage de la source et d'éventuelle lumière parasite, et/ou forme un masquage de la fixation (91) du vitrage à la carrosserie (90) du véhicule par la deuxième face (12).

14. Vitrage lumineux de véhicule (100, 100', 100", 110, 120, 200, 300, 400) et/ou ledit profilé support (500, 510, 520, 530, 600, 700, 710, 720, 800, 900, 1010, 1020, 1030, 2000, 3000, 4000, 5000) selon l'une des revendications précédentes **caractérisé en ce que** le capot (4), est un enjoliveur, ou l'élément de couverture (4, 4') est masqué après fixation du vitrage à la carrosserie, capot par exemple le long d'un bord ou formant un cadre.

15. Vitrage lumineux de véhicule selon l'une des revendications précédentes **caractérisé en ce que** le capot (4) comprend des moyens de maintien (50') dudit profilé (3) et/ou un évidement (50) pour le passage de la connectique le long d'un logement dans l'élément fonctionnel et/ou des moyens de positionnement (60) du profilé support des diodes (3).

16. Vitrage de véhicule à diodes électroluminescentes (1010, 1020, 1030, 2000, 3000, 4000) selon l'une des revendications 1 à 15 **caractérisé en ce que** le vitrage est simple, la première feuille (1) étant en verre minéral ou organique, notamment en PC, PMMA, PU, éventuellement bimatière (1").

17. Vitrage de véhicule à diodes électroluminescentes (100, 110, 120, 200, 300, 400, 500, 1010, 1020, 1030) selon l'une des revendications 1 à 15 **caractérisé en ce qu'**une deuxième feuille (1'), notamment en verre minéral ou organique est feuilletée par un intercalaire de feuilletage (8) à la première feuille (1) et de préférence
- la tranche de la première feuille comporte un évidement marginal traversant où est logée la source (2), ou la deuxième feuille est dépassante du bord d'injection de la première feuille, créant un décrochement latéral du vitrage,
- ledit évidement marginal ou ledit décrochement latéral recevant la partie inférieure (au moins) de l'évidement (70) de l'élément fonctionnel (7).

18. Vitrage de véhicule à diodes électroluminescentes (510, 520, 530, 710, 720) selon l'une des revendications 1 à 15 **caractérisé en ce que** le vitrage est un vitrage multiple, notamment un vitrage feuilleté, un double vitrage sous vide ou isolant, ou encore une triple vitrage avec l'évidement (70) essentiellement latéral, le capot (4) ou mastic (4') essentiellement latéral, la première feuille (1) étant une feuille externe ou centrale du triple vitrage.

19. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes **caractérisé en ce que** dans la ou les zones lumineuses, on forme un éclairage interne d'ambiance, un éclairage interne de lecture par vitre latérale, toit, un affichage lumineux de signalisation interne et/ou externe.

20. Vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes le vitrage étant choisi parmi :
- vitre latérale d'un véhicule terrestre, notamment automobile, véhicule utilitaire, camion, train, notamment avec l'élément fonctionnel qui est une pièce de maintien d'un système de lève-vitre ou avec le capot enjoliveur,
- toit mobile ou fixe d'un véhicule terrestre, notamment automobile, véhicule utilitaire, camion, train, avec une première feuille éventuellement galbée, notamment un vitrage feuilleté,
- pare brise d'un véhicule terrestre, notamment automobile, véhicule utilitaire, camion, train, notamment avec la ou les zones lumineuses dans le cadre en émail ou à proximité, lunette arrière notamment dans le cadre en émail ou à proximité,
- hublot, pare-brise d'un véhicule aérien,
- vitres de fenêtre, toit, d'un véhicule aquatique, bateau, sous marin,
- double ou triple vitrage dans un train, un bus.

21. Véhicule incorporant le vitrage lumineux de véhicule (100, 100', 100", 110, 120, 200, 300, 400, 500, 510, 520, 530, 600, 700, 710, 720, 800, 900, 1010, 1020, 1030, 2000, 3000, 4000, 5000) selon l'une des revendications précédentes.

22. Procédé de fabrication du vitrage lumineux de véhicule (100, 100', 100", 110, 120, 200, 300, 400, 500, 510, 520, 530, 600, 700, 710, 720, 1010, 1020, 1030, 2000, 3000) selon l'une des revendications précédentes de vitrage **caractérisé en ce qu'**il comprend les étapes suivantes :
- la fourniture de la première feuille (1), son placement dans une moule,
- la formation de l'élément fonctionnel (7) par le surmoulage par injection d'une matière d'encapsulation polymérique, et de façon à former en outre l'évidement (70), notamment au moyen d'une matière de remplissage, d'un insert perdu, d'une partie mobile de moule,
- le montage de la source (2, 2') en regard du bord d'injection ou de la tranche d'injection, dans ou sous ledit évidement (70),
- le recouvrement de l'évidement par l'élément de couverture (4, 4') et sa fixation.

23. Procédé de fabrication du vitrage lumineux de véhicule (800, 900, 4000, 5000) selon l'une des revendications précédentes de vitrage **caractérisé en ce qu'**il comprend les étapes suivantes :
- la fourniture de la première feuille transparente (1),
- le montage de l'élément fonctionnel rapporté avec ledit évidement, notamment un joint polymérique ou une pièce métallique, et le montage de l'éventuelle pièce de liaison,
- le montage d'un profilé support de diodes sur la première feuille et au travers dudit évidement,
- le recouvrement de l'évidement par l'élément de couverture et sa fixation.

## Patentansprüche

1. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), umfassend:
- eine erste Scheibe aus mineralischem oder organischem Glas (1), die eine erste Hauptseite (11) und eine zweite Hauptseite (12) sowie eine Kante (10) aufweist,
- eine umfangseitige Lichtquelle (2, 2', 20) mit einer emittierenden Seite (21, 21'), ausgewählt aus einem Lichtwellenleiter (20) und Leuchtdioden (2, 2'), die jeweils einen Halbleiterchip an einem Tragprofil der Dioden (3) umfassen, wobei die emittierende Seite sich gegenüber der sogenannten Einspeisungskante (10) oder einem sogenannten Einspeisungsrand der zweiten Seite (12) befindet, für eine Ausbreitung des eingespeisten sichtbaren Lichts und/oder ultravioletten, genannt UV-Lichts in der Dicke der ersten Scheibe, wobei die erste Scheibe (1) nun die Funktion der Leitung des eingespeisten Lichts übernimmt,
- um wenigstens einen Leuchtbereich zu bilden:
- Mittel zur Extraktion des über die erste und/oder die zweite Hauptseite geleiteten Lichts, die Oberflächendiffusionsmittel der ersten und/oder der zweiten Hauptseite (12') oder Volumendiffusionsmittel in der ersten Scheibe sind,
- und/oder, wenn das eingespeiste Licht UV-Licht ist, Mittel zur Umwandlung des UV-Lichts in sichtbares Licht über die erste und/oder die zweite Hauptseite, die Leuchtstoffe insbesondere auf der ersten und/oder der zweiten Hauptseite sind,
- ein angesetztes, mit der ersten Scheibe verbundenes umfangseitiges Funktionselement (7), das gegenüber Fluid(en), insbesondere gegenüber flüssigem Wasser, sogar Dampf dicht ist, sich über die Einspeisungskante oder den Einspeisungsrand erstreckt, insbesondere ein Funktionselement, das aus einer Anformung oder einem vormontierten Element ausgewählt ist,
wobei das Funktionselement mit wenigstens einer Ausnehmung (70) versehen ist, um die Quelle anzuordnen und um das Einspeisen des Lichts in den Einspeisungsrand oder die Einspeisungskante zu ermöglichen,
- ein Element zum Abdecken (4, 4') der Ausnehmung (70) und der Quelle (2, 2', 20), das gegenüber Fluid(en), insbesondere gegenüber flüssigem Wasser, sogar Dampf dicht ist, das ausgewählt ist aus:
- einer Kappe (4), die durch Befestigungsmittel (81, 82, 83, 86) fest verbunden ist mit
- dem Funktionselement,
- und/oder mit einem Verbindungsteil (7'), das insbesondere wenigstens teilweise in der Ausnehmung angeordnet und mit dem Funktionselement verbunden und/oder mit der ersten Scheibe verbunden ist,
- und/oder mit der ersten Scheibe, insbesondere aus organischem Glas,
wobei die Kappe eine Haupt-, sogenannte Innenfläche, die der Ausnehmung (70) zugewandt ist, aufweist,
wobei die Kappe einem Grenzflächenelement (5, 51, 52, 5') für die Grenzflächendichtigkeit gegenüber Fluid(en), insbesondere gegenüber flüssigem Wasser, sogar Dampf, zugeordnet ist, das angeordnet ist
- zwischen der Kappe und dem Funktionselement und/oder dem darunter liegenden Verbindungsteil und/oder der zweiten Seite,
- und/oder in die Kappe integriert und mit dem Funktionselement in Kontakt ist,
- und/oder aber in das Funktionselement integriert und mit der Kappe in Kontakt ist,
- einen gegenüber Fluid(en) dichten Verschlusskitt (4'), der die Quelle bedeckt und das angesetzte Funktionselement (7) verschließt.

2. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach Anspruch 1, **dadurch gekennzeichnet, dass**:
- das Abdeckelement (4, 4') gegenüber dem Einspeisungsrand im Wesentlichen zur Seite hin gelegen ist, das heißt oberhalb und/oder an der zweiten Seite liegt oder zu der zweiten Seite versetzt ist, gegenüber wenigstens dem Raum der vor der Einspeisung ausgesandten Strahlungen, sogenannten Kopplungsraum,
- oder das Abdeckelement (4, 4') gegenüber der Einspeisungskante seitlich ist, insbesondere eine seitliche Kappe (4), gegenüber der Kante einer zweiten Scheibe und/oder einer möglichen dritten Scheibe (18) der dann mehrfachen Verglasung (710, 720) insbesondere mit die Scheibe(n) trennender/trennenden Gasfüllung(en) (8), oder aber ein seitlicher Kitt (4') insbesondere bei der als mehrfach gewählten, insbesondere Verbund-Verglasung (510, 520, 530).

3. Leuchtende Fahrzeugverglasung (100, 100', 100", 110, 120, 200, 300, 400, 500, 510, 520, 530, 600, 700, 710, 720, 1010, 1020, 1030, 2000, 3000), nach einem der vorstehenden Ansprüche, **dadurch gekennzeichnet, dass** das Funktionselement angeformt, polymer (7) ist, und dass die Verglasung vorzugsweise zwischen der Einkapselung und der Verglasung, insbesondere aus mineralischem Glas, eine Ein-, Zwei- oder Dreikomponentengrundierungsschicht, beispielsweise auf der Basis von Polyurethan, Polyester, Polyvinylacetat, Isocyanat umfasst.

4. Leuchtende Fahrzeugverglasung (600, 800, 900), nach einem der vorstehenden Ansprüche, **dadurch gekennzeichnet, dass** das Funktionselement (7) ein einseitiges Teil auf der zweiten Seite (12) ist, insbesondere eine Anformung oder ein angeklebtes Teil, ein Teil mit einem Halter zur Befestigung (X) eines Fahrzeugelements an der Verglasung oder der Verglasung an einem Fahrzeugelement, entlang wenigstens einem Einspeisungsrand, sogar wenigstens zweier gegenüberliegender Ränder der Verglasung.

5. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach einem der vorstehenden Ansprüche, **dadurch gekennzeichnet, dass** der Raum der vor der Einspeisung ausgesandten Strahlungen, sogenannte Kopplungsraum, gasförmig ist und/oder sich das lokale Element für die Grenzflächendichtigkeit gegenüber Fluid(en) am Umfang der Innenfläche der Kappe (4) oder an einer Seite der Kappe (4) befindet, insbesondere das Element für die Grenzflächendichtigkeit gegenüber Fluid(en) einen Strang (5, 51, 52, 91') bildet.

6. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach einem der vorstehenden Ansprüche, **dadurch gekennzeichnet, dass** die Befestigung der Quelle (2, 2', 20) an der Verglasung außerhalb des Kopplungsraumes, insbesondere außerhalb der Einspeisungskante (10) oder des Einspeisungsrandes oder, für die Dioden, durch die Befestigung des Tragprofils (3) erfolgt, insbesondere durch Kleben oder doppelseitiges Klebeband oder Festclipsen an einer der Seiten der ersten Scheibe (11, 12), insbesondere der zweiten Seite (12) oder an einer der Seiten (13, 14) von einer zugeordneten und der ersten Scheibe gegenüberliegenden und die Einspeisungskante für die Befestigung oder eine verbindende Zwischenschicht (8) überragenden zweiten Scheibe (1') oder an der Innenfläche der Kappe (4) oder an dem Funktionselement (7), insbesondere an einer Stufe zum Auflegen des Tragprofils (3).

7. Leuchtende Fahrzeugverglasung (1030), nach einem der vorstehenden Ansprüche, **dadurch gekennzeichnet, dass** das Grenzflächendichtungselement (5'), vorzugsweise am Umfang der Kappe (4), ein reversibler Kleber ist, der Teil ist der oder die dann reversiblen Befestigungsmittel der Kappe (4) bildet, vorzugsweise ein Kleberstrang, der insbesondere mit der Innenfläche der Kappe und dem Funktionselement (7) oder dem Verbindungsteil oder der zweiten Seite in Kontakt ist, insbesondere Kleber vom Typ Zweikomponenten-Epoxid.

8. Leuchtende Fahrzeugverglasung (100, 100', 100", 110, 120, 200, 300, 400, 600, 700, 710, 720, 800, 900, 1010, 1020, 2000, 3000, 4000, 5000), nach einem der Ansprüche 1 bis 6, **dadurch gekennzeichnet, dass** das Grenzflächendichtungselement, vorzugsweise am Umfang der Kappe (4), ein komprimiertes Material (5, 51, 52) ist, wobei die Dichtigkeit durch Komprimieren des Materials mittels einer Schließkraft der Befestigungsmittel der Kappe hergestellt wird, insbesondere das Grenzflächendichtungselement ausgewählt ist aus:
- einer Polymerdichtung (5, 51), beispielsweise aus TPE, EPDM, insbesondere ein O-Ring, mit Dichtungslippe(n), wobei die Dichtung sich insbesondere in einer Nut der Kappe (4) oder einer Nut in dem Funktionselement oder des Verbindungsteils oder der zweiten Seite befindet,
- ein als polymer gewähltes Dichtungsprofil (52) an dem Funktionselement, beispielsweise Lippe(n) einer Einkapselung oder zuvor angebrachten Dichtung, insbesondere aus EPDM, an der Innenfläche oder einer Seite der Polymerkappe; oder ein Dichtungsprofil an dem Verbindungsteil,
- ein - eventuell haftend gemachter - Schaum, insbesondere Acrylschaum, PU, Kautschuk, thermoplastische Elastomere, aus TPE, aus Polyester, insbesondere aus Einkomponentenkautschuk-Polyester.

9. Leuchtende Fahrzeugverglasung (100, 100', 100", 110, 120, 200, 300, 400, 500, 600, 700, 710, 720, 800, 900, 1010, 1020, 2000, 3000, 4000, 5000), nach einem der vorstehenden Ansprüche, **dadurch gekennzeichnet, dass** die Befestigungsmittel (81, 82) reversibel sind, die Befestigungsmittel ausgewählt sind aus:
- Festclipsmitteln (82, 83), die an der Kappe angeordnet sind, vorzugsweise fester Bestandteil der Kappe sind (5, 51, 52, 91') und insbesondere für das Festclipsen in einem oder Aufnahmebereich(en) (72) des Funktionselements (7) und/oder des Verbindungsteils und/oder der insbesondere organischen ersten Scheibe aufgenommen sind,
- Festclipsmitteln (86), die fester Bestandteil der Kappe sind, vorzugsweise außerhalb in dem Dichtungsbereich und insbesondere in einem oder Aufnahmebereich(en) des Funktionselements (7) und/oder des Verbindungsteils und/oder der insbesondere organischen ersten Scheibe aufgenommen sind,
- Schraubmitteln (81), die von der Innenseite vorstehen, vorzugsweise im Dichtungsbereich, insbesondere zwischen dem Grenzflächendichtungselement (5) und dem Rand der Ausnehmung (70).

10. Fahrzeugverglasung mit Leuchtdioden (400), nach einem der Ansprüche 1 bis 9, **dadurch gekennzeichnet, dass** das Verbindungsteil vorzugsweise ein ausgespartes einseitiges Teil mit geschlossener Kontur, wie einen Rahmen, bildet.

11. Leuchtende Fahrzeugverglasung (3000) nach einem der Ansprüche 1 bis 10, **dadurch gekennzeichnet, dass** die erste Scheibe (1) aus insbesondere organischem Glas, insbesondere aus PC besteht, mit, in ihrer Dicke, einem Sackloch (70') der zweiten Seite (12), beispielsweise einer Ausbuchtung für die Aufnahme der Quelle gegenüber dem Einspeisungsrand.

12. Fahrzeugverglasung mit Leuchtdioden, nach dem vorstehenden Anspruch, **dadurch gekennzeichnet, dass** das Loch (70') über den gesamten Umfang der zweiten Seite (12) verläuft und die Kappe (4) einen Rahmen, der insbesondere die Befestigungsmittel integriert, bildet.

13. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach einem der vorstehenden Ansprüche, **dadurch gekennzeichnet, dass** die Verglasung ein Element zum Abdecken der Quelle und von möglichem Streulicht und/oder zum Abdecken der Befestigung (91) der Verglasung an der Karosserie (90) des Fahrzeugs über die zweite Seite (12) umfasst, wobei das Abdeckelement sein kann
- ein Teil des Funktionselements (7), insbesondere eine (hinreichend opake, schwarze) Polymereinkapselung,
- und/oder ein hinreichend opakes Email (15) am Umfang der zweiten Seite und/oder an der erste Seite oder einer Seite eines gegenüber der ersten Seite angesetzten folienförmigen Films, insbesondere wenn das Funktionselement einseitig oder zweiseitig ist,
- und/oder eine reflektierende Oberfläche (15) am Umfang der zweiten Seite und/oder auf der ersten Seite oder einer gegenüber der ersten Seite angesetzten Seite,
- und/oder die erste Scheibe organisch, aus zwei Materialien bestehend transparent und opak ist,
- der opake Bereich (1") der ersten Scheibe (1) am Umfang der zweiten Seite (12) und/oder an der ersten Seite eine Abdeckung der Quelle und von möglichem Streulicht bildet und/oder eine Abdeckung der Befestigung (91) der Verglasung an der Karosserie (90) des Fahrzeugs über die zweite Seite (12) bildet.

14. Leuchtende Fahrzeugverglasung (100, 100', 100", 110, 120, 200, 300, 400) und/oder das Tragprofil (500, 510, 520, 530, 600, 700, 710, 720, 800, 900, 1010, 1020, 1030, 2000, 3000, 4000, 5000), nach einem der vorstehenden Ansprüche, **dadurch gekennzeichnet, dass** die Kappe (4) eine Zierkappe ist oder das Abdeckelement (4, 4') nach Befestigen der Verglasung an der Karosserie verdeckt ist, Kappe beispielsweise entlang eines Randes oder die einen Rahmen bildet.

15. Leuchtende Fahrzeugverglasung nach einem der vorstehenden Ansprüche, **dadurch gekennzeichnet, dass** die Kappe (4) Mittel zum Halten (50') des Profils (3) und/oder eine Ausnehmung (50) für den Durchgang der Anschlüsse entlang einer Aufnahme in dem Funktionselement und/oder Mittel zur Positionierung (60) des Tragprofils der Dioden (3) umfasst.

16. Fahrzeugverglasung mit Leuchtdioden (1010, 1020, 1030, 2000, 3000, 4000) nach einem der Ansprüche 1 bis 15, **dadurch gekennzeichnet, dass** die Verglasung einfach ist, wobei die erste Scheibe (1) aus mineralischem oder organischem Glas, insbesondere aus PC, PMMA, PU, eventuell aus zwei Materialien (1") besteht.

17. Fahrzeugverglasung mit Leuchtdioden (100, 110, 120, 200, 300, 400, 500, 1010, 1020, 1030), nach einem der Ansprüche 1 bis 15, **dadurch gekennzeichnet, dass** eine zweite Scheibe (1'), insbesondere aus mineralischem oder organischem Glas, mittels einer verbindenden Zwischenschicht (8) mit der ersten Scheibe (1) verbunden ist, und vorzugsweise
- die Kante der ersten Scheibe eine durchgehende randseitige Ausnehmung umfasst, in der die Quelle (2) aufgenommen ist, oder die zweite Scheibe über den Einspeisungsrand der ersten Scheibe hinausragt, wodurch ein seitlicher Absatz der Verglasung erzeugt wird,
- wobei die randseitige Ausnehmung oder der seitliche Absatz (wenigstens) den unteren Teil der Ausnehmung (70) des Funktionselements (7) aufnimmt.

18. Fahrzeugverglasung mit Leuchtdioden (510, 520, 530, 710, 720), nach einem der Ansprüche 1 bis 15, **dadurch gekennzeichnet, dass** die Verglasung eine Mehrfachverglasung, insbesondere eine Verbundverglasung, eine Vakuum- oder isolierende Doppelverglasung oder aber eine Dreifachverglasung mit im Wesentlichen seitlicher Ausnehmung (70), im Wesentlichen seitlicher Kappe (4) oder seitlichem Kitt (4'), wobei die erste Scheibe (1) eine äußere oder mittlere Scheibe der Dreifachverglasung ist.

19. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach einem der vorstehenden Ansprüche, **dadurch gekennzeichnet, dass** in dem oder den Leuchtbereichen eine innere Raumbeleuchtung, eine Innenlesebeleuchtung pro Seitenscheibe, Dach, eine innere und/oder äußere leuchtende Signalanzeige gebildet wird.

20. Leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000), nach einem der vorstehenden Ansprüche, wobei die Verglasung ausgewählt ist aus:
- Seitenscheibe eines Landfahrzeugs, insbesondere Kraftfahrzeugs, Nutzfahrzeugs, LKWs, Zuges, insbesondere mit dem Funktionselement, das ein Teil zum Halten eines Fensterhebersystems ist oder mit der Zierkappe,
- bewegliches oder festes Dach eines Landfahrzeugs, insbesondere Kraftfahrzeugs, Nutzfahrzeugs, LKWs, Zuges, mit einer eventuell gewölbten ersten Scheibe, insbesondere einer Verbundverglasung,
- Windschutzscheibe eines Landfahrzeugs, insbesondere Kraftfahrzeugs, Nutzfahrzeugs, LKWs, Zuges, insbesondere mit dem oder den Leuchtbereichen im Email-Rahmen oder in der Nähe, Heckscheibe, insbesondere im Email-Rahmen oder in der Nähe,
- Bullauge, Windschutzscheibe eines Luftfahrzeugs,
- Fensterscheiben, Dach, eines Wasserfahrzeugs, Schiffes, U-Boots,
- Doppel- oder Dreifachverglasung in einem Zug, einem Bus.

21. Fahrzeug, in das die leuchtende Fahrzeugverglasung (100, 100', 100", 110, 120, 200, 300, 400, 500, 510, 520, 530, 600, 700, 710, 720, 800, 900, 1010, 1020, 1030, 2000, 3000, 4000, 5000) nach einem der vorstehenden Ansprüche integriert ist.

22. Verfahren zur Herstellung der leuchtenden Fahrzeugverglasung (100, 100', 100", 110, 120, 200, 300, 400, 500, 510, 520, 530, 600, 700, 710, 720, 1010, 1020, 1030, 2000, 3000) nach einem der vorstehenden Verglasungsansprüche, **dadurch gekennzeichnet, dass** es die folgenden Schritte umfasst:
- das Bereitstellen der ersten Scheibe (1), ihr Anordnen in einer Form,
- das Ausbilden des Funktionselements (7) durch Anspritzen eines polymeren Einkapselungsmaterials und derart, dass ferner die Ausnehmung (70) gebildet wird, insbesondere mittels eines Füllmaterials, eines Einwegeinsatzes, eines beweglichen Formenteils,
- das Anbringen der Quelle (2, 2') gegenüber dem Einspeisungsrand oder der Einspeisungskante in oder unter der Ausnehmung (70),
- das Abdecken der Ausnehmung mit dem Abdeckelement (4, 4') und dessen Befestigen.

23. Verfahren zur Herstellung der leuchtenden Fahrzeugverglasung (800, 900, 4000, 5000) nach einem der vorstehenden Verglasungsansprüche, **dadurch gekennzeichnet, dass** es die folgenden Schritte umfasst:
- das Bereitstellen der transparenten ersten Scheibe (1),
- das Anbringen des angesetzten Funktionselements mit der Ausnehmung, insbesondere eine Polymerdichtung oder ein Metallteil, und das Anbringen des möglichen Verbindungsteils,
- das Anbringen eines Dioden-Tragprofils an der ersten Scheibe und durch die Ausnehmung,
- das Abdecken der Ausnehmung mit dem Abdeckelement und dessen Befestigen.

## Claims

1. A luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) comprising:
- a first sheet of mineral or organic glass (1) having a first main face (11) and a second main face (12) and an edge (10),
- a peripheral light source (2, 2', 20) with an emitting face (21, 21') selected from an optical fiber (20) and light emitting diodes (2, 2') each comprising a semiconductor chip on a support section of the diodes (3), the emitting face facing what is called the injection edge (10) or a side of the second face (12) called the injection side for propagation of the injected visible and/or ultraviolet called UV light in the thickness of the first sheet, the first sheet (1) then playing the role of a guide for the injected light,
- to form at least one luminous zone:
- means for extracting the guided light via the first and/or the second main face, which are surface diffusion means of the first and/or second main face (12') or volume diffusion means in the first sheet,
- and/or when the injected light is UV, means for converting the UV light to visible light via the first and/or the second main face, which are luminophores particularly on the first and/or the second main face,
- an added peripheral functional element (7), bonded to the first sheet, which is fluid-tight, in particular impermeable to liquid water or even water vapor, extending on the injection edge or the injection side, in particular a functional element which is selected from an overmolding or a preassembled element,
the functional element being provided with at least one cavity (70) for placing the source and for allowing the injection of said light into the injection side or the injection edge,
- a covering element (4, 4') for covering the cavity (70) and the source (2, 2', 20), which is fluid-tight, in particular impermeable to liquid water or even water vapor, which is selected from:
- a cap (4) joined by fastening means (81, 82, 83, 86),
- to the functional element,
- and/or to a connecting part (7') in particular placed at least partly in the cavity and connected to the functional element and/or connected to the first sheet,
- and/or to the first sheet, in particular of organic glass
the cap having a general face called an inner face oriented toward the cavity (70),
the cap being combined with an interfacial element (5, 51, 52, 5'), for interfacial fluid-tightness, in particular impermeable to liquid water or even water vapor, which is arranged
- between the cap and the functional element and/or the underlying connecting part and/or the second face,
- and/or integrated with the cap and in contact with the functional element,
- and/or further integrated with the functional element and in contact with the cap,
- a fluid-tight sealing mastic (4') covering the source and sealing the added functional element (7).

2. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in claim 1, **characterized in that**
- the covering element (4, 4') facing the injection side is essentially facial, that is to say, above and/or on the second face or offset from the second face, facing at least the space of the radiation emitted before injection, called the coupling space,
- or the covering element (4, 4') is lateral facing said injection edge, in particular a side cap (4), facing the edge of a second sheet and/or of an optional third sheet (18) of said glazing which is then a multiple glazing (710, 720) in particular with gas space(s) (8) separating the sheet(s) or even a side mastic (4') in particular in said glazing selected to be multiple in particular laminated (510, 520, 530).

3. The luminous vehicle glazing (100, 100', 100'', 110, 120, 200, 300, 400, 500, 510, 520, 530, 600, 700, 710, 720, 1010, 1020, 1030, 2000, 3000) as claimed in either of the preceding claims, **characterized in that** the functional element is duplicate molded, polymeric (7) and **in that** the glazing preferably comprises, between the encapsulation and the glazing, in particular of mineral glass, a layer of mono-, bi- or tricomponent primer, for example based on polyurethane, polyester, polyvinyl acetate, isocyanate.

4. The luminous vehicle glazing (600, 800, 900) as claimed in one of the preceding claims, **characterized in that** the functional element (7) is a one-sided part on the second face (12), in particular an overmolding or a bonded part, a part with a fastening support (X) of a vehicle element on the glazing or of the glazing on a vehicle element, along at least one injection side or even at least two opposite sides of the glazing.

5. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims, **characterized in that** the space of the radiation emitted before injection, called coupling space, is gaseous and/or the local fluid-tight interfacial sealing element is on the periphery of the inner face of the cap (4) or on one side of the cap (4), in particular the fluid-tight interfacial sealing element forms a gasket (5, 51, 52, 91').

6. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims, **characterized in that** the fastening of the source (2, 2', 20) to the glazing is carried out outside the coupling space, in particular outside the injection edge (10) or the injectionside and, for the diodes, by fastening
the support section (3), in particular by bonding or two-sided adhesive or clipping to one of the faces of the first sheet (11, 12), in particular the second face (12), or to one of the faces (13, 14) of an associated second sheet (1') and facing the first sheet and extending beyond the injection edge for said fastening or beyond a lamination interlayer (8) or to the inner face of the cap (4) or to the functional element (7), in particular to a step for installing the support section (3).

7. The luminous vehicle glazing (1030) as claimed in one of the preceding claims, **characterized in that** the interfacial sealing element (5'), preferably on the periphery of the cap (4), is a reversible glue, forming part of or constituting said accordingly reversible means for fastening the cap (4), preferably a gasket of glue particularly in contact with the inner face of the cap, and the functional element (7) or the connecting part or the second face, in particular adhesive of the bicomponent epoxy type.

8. The luminous vehicle glazing (100, 100', 100'', 110, 120, 200, 300, 400, 600, 700, 710, 720, 800, 900, 1010, 1020, 2000, 3000, 4000, 5000) as claimed in one of claims 1 to 6, **characterized in that** the interfacial sealing element, preferably on the periphery of the cap (4), is a compressed material (5, 51, 52), the compressive sealing of the material being achieved by a closure force of said cap fastening means, in particular the interfacial sealing element is selected from:
- a polymer seal (5, 51) for example made from TPE, EPDM in particular an O-ring, with lip seal(s), the seal particularly being in a groove of the cap (4), or a groove in the functional element or of the connecting part or of the second face,
- a seal section (52) on the functional element, selected from polymer, for example encapsulate lip(s) or preassembled seal, particularly made from EPDM, on the inner face or on a side of the polymer cap; or a seal section on the connecting part,
- a foam, optionally made adhesive, in particular acrylic foam, PU, rubber, thermoplastic elastomers, of TPE, polyester, in particular a monocomponent rubber polyester.

9. The luminous vehicle glazing (100, 100', 100'', 110, 120, 200, 300, 400, 500, 600, 700, 710, 720, 800, 900, 1010, 1020, 2000, 3000, 4000, 5000) as claimed in one of the preceding claims, **characterized in that** the fastening means (81, 82) are reversible, and are selected from:
- clipping means (82, 83) arranged on the cap, preferably forming an integral part of the cap (5, 51, 52, 91') and in particular accommodated for clipping in one or more host zones (72) of the functional element (7) and/or of the connecting part and/or of the in particular organic first sheet,
- clipping means (86) forming an integral part of the cap, preferably outside in the sealing zone and in particular accommodated in one or more host zones of the functional element (7) and/or
of the connecting part and/or of the in particular organic first sheet,
- screw means (81), extending beyond the inner face, preferably in the sealing zone, in particular between the interfacial sealing element (5) and the side of the cavity (70).

10. A vehicle glazing with light emitting diodes (400) as claimed in one of the claims 1 to 9, **characterized in that** the connecting part preferably forms a one-sided recessed part having a closed contour such as a frame.

11. The luminous vehicle glazing (3000) as claimed in
one of the claims 1 to 10, **characterized in that** the first sheet (1) is made from glass in
particular organic glass, in particular of PC, with a blind hole (70') in its thickness, of the second face (12), for example a setback, for accommodating the source facing the injection side.

12. The vehicle glazing with light emitting diodes as claimed in the preceding claim, **characterized in that** the hole (70') is present on the entire perimeter of the second face (12) and the cap (4) forms a frame in particular integrating said fastening means.

13. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims, **characterized in that** the glazing comprises an element for masking the source and any interfering light, and/or for masking the fastener (91) of the glazing to the vehicle body (90) by the second face (12), the masking element possibly being
- a part of the functional element (7), in particular a polymer encapsulation (sufficiently opaque, black),
- and/or a sufficiently opaque enamel (15), on the periphery of the second face and/or on the first face or a face of an added sheet film facing the first face in particular when the functional element is one-sided or two-sided,
- and/or a reflecting surface (15) on the periphery of the second face and/or on the first face or an added face facing the first face,
- and/or the first sheet is organic, bimaterial, transparent and opaque,
- the opaque zone (1'') of the first sheet (1) on the periphery of the second face (12) and/or on the first face, forms a masking of the source and of possible, interfering light, and/or forms a masking of the fastening (91) of the glazing to the vehicle body (90) by the second face (12).

14. The luminous vehicle glazing (100, 100', 100", 110, 120, 200, 300, 400) and/or said support section (500, 510, 520, 530, 600, 700, 710, 720, 800, 900, 1010, 1020, 1030, 2000, 3000, 4000, 5000) as claimed in one of the preceding claims, **characterized in that** the cap (4) is a trim, or the covering element (4, 4') is masked after fastening the glazing to the body, cap for example along an edge or forming a frame.

15. The luminous vehicle glazing as claimed in one of the preceding claims, **characterized in that** the cap (4) comprises means (50') for securing said section (3) and/or a cavity (50) for the passage of the connections along a housing in the functional element and/or means (60) for positioning the support section of the diodes (3).

16. The vehicle glazing with light emitting diodes (1010, 1020, 1030, 2000, 3000, 4000) as claimed in one of claims 1 to 15, **characterized in that** the glazing is a single glazing, the first sheet (1) being made of mineral or organic glass, in particular of PC, PMMA, PU, optionally bimaterial (1'').

17. The vehicle glazing with light emitting diodes (100, 110, 120, 200, 300, 400, 500, 1010, 1020, 1030) as claimed in one of claims 1 to 15, **characterized in that** a second sheet (1'), in particular of mineral or organic glass, is laminated by a lamination interlayer (8) to the first sheet (1) and preferably
- the edge of the first sheet comprises a marginal through cavity where the source (2) is housed, or the second sheet extends beyond the injection side of the first sheet, creating a side setback of the glazing,
- said marginal cavity or said side setback accommodating the bottom portion (at least) of the cavity (70) of the functional element (7).

18. The vehicle glazing with light emitting diodes (510, 520, 530, 710, 720) as claimed in one of the claims 1 to 15, **characterized in that** the glazing is a multiple glazing, in particular a laminated glazing, a vacuum or insulating double glazing, or even a triple glazing with the cavity (70) essentially lateral, the cap (4) or mastic (4') essentially lateral, the first sheet (1) being an outer or central sheet of the triple glazing.

19. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims, **characterized in that** in the luminous zone or zones is formed an internal ambience lighting, an internal reading lighting by side window, roof, a light display of internal and/or external indications.

20. The luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims, the glazing being selected from:
- side window of a land vehicle, in particular automobile, utility vehicle, truck, train, in particular with the functional element which is a securing part of a window raising system or with the trim cap,
- sliding or fixed roof of a land vehicle, in particular automobile, utility vehicle, truck, train, with a first optionally cambered sheet, in particular a laminated glazing,
- windshield of a land vehicle, in particular automobile, utility vehicle, truck, train, in particular with the luminous zone or zones in the enamel frame or nearby, rear window in particular in the enamel frame or nearby,
- window, windshield of an aerial vehicle,
- glazings for window, roof, of an aquatic vehicle, ship, submarine,
- double or triple glazing in a train, a bus.

21. A vehicle incorporating the luminous vehicle glazing (100, 100', 100'', 110, 120, 200, 300, 400, 500, 510, 520, 530, 600, 700, 710, 720, 800, 900, 1010, 1020, 1030, 2000, 3000, 4000, 5000) as claimed in one of the preceding claims.

22. A method for manufacturing the luminous vehicle glazing (100, 100', 100'', 110, 120, 200, 300, 400, 500, 510, 520, 530, 600, 700, 710, 720, 1010, 1020, 1030, 2000, 3000) as claimed in one of the preceding claims of glazing, **characterized in that** it comprises the following steps:
- supply of the first sheet (1), its placement in a mold,
- formation of the functional element (7) by overmolding by injection of a polymer encapsulation material, and in order further to form the cavity (70), in particular by means of a filling material, a disposable insert, a mobile mold portion,
- assembly of the source (2, 2') facing the injection side or the injection edge, in or under said cavity (70),
- covering of the cavity by the covering element (4, 4') and its fastening.

23. A method for manufacturing the luminous vehicle glazing (800, 900, 4000, 5000) as claimed in one of the preceding claims of glazing, **characterized in that** it comprises the following steps:
- supply of the first transparent sheet (1),
- assembly of the added functional element with said cavity, in particular a polymer seal or a metal part, and the assembly of the optional connecting part,
- assembly of a support sect ion of the diodes on the first sheet and through said cavity,
- covering of the cavity by the covering element and its fastening.
